# EUROPEAN PATENT APPLICATION

(11) **EP 4 651 539 A1**
(43) Date of publication of application: **19.11.2025**
(21) Application number: 24756820.7
(22) Date of filing: 09.02.2024
(51) Int. Cl.: H04W 16/26, H04W 8/22

(54) **COMMUNICATION METHOD**

(30) Priority: 13.02.2023 US 202363445103 P
(71) Applicant: Kyocera Corporation, Kyoto-shi, Kyoto 612-8501 (JP)
(72) Inventor: FUJISHIRO, Masato, Kyoto-shi, Kyoto 612-8501 (JP); CHANG, Henry, San Diego, California 92123 (US)
(74) Representative: Viering, Jentschura & Partner mbB Patent- und Rechtsanwälte
(86) International application number: PCT/JP2024/004573
(87) International publication number: WO 2024/171975

(57) **Abstract**

A communication method used in a relay apparatus including a relay device that performs a relay operation of relaying a radio signal transmitted between a network and a user equipment, and a control terminal that receives a control signal used for control of the relay device from the network includes the steps of transitioning, by the control terminal, to a radio resource control (RRC) connected state in a cell included in the network; determining whether a condition is satisfied for incorporating notification information indicating that a host apparatus is the relay apparatus into a message to be transmitted from the control terminal to the cell; and transmitting the message including the notification information from the control terminal to the cell in response to determining that the condition is satisfied.

## Description

### TECHNICAL FIELD

The present disclosure relates to a communication method used in a mobile communication system.

### BACKGROUND OF INVENTION

In recent years, a mobile communication system of the fifth generation (5G) has been attracting attention. New Radio (NR), which is a radio access technology of the 5G system, is capable of wide-band transmission via a high frequency band as opposed to Long Term Evolution (LTE), which is a fourth-generation radio access technology.

Since radio signals (radio waves) in the high frequency band such as a millimeter wave band or a terahertz wave band have high rectilinearity, reduction of coverage of a base station is a problem. In order to solve such a problem, a repeater apparatus that is a type of relay apparatus relaying radio signals between the network and a user equipment and can be controlled from a network is attracting attention (see, for example, Non-Patent Literature 1). Such a repeater apparatus can extend the coverage of the base station while suppressing occurrence of interference by, for example, amplifying a radio signal received from the base station and transmitting the radio signal through directional transmission. Such a repeater apparatus is referred to as a network-controlled repeater (NCR).

### CITATION LIST

### NON-PATENT LITERATURE

Non-Patent Literature 1: 3GPP Contribution: RP-213700, "New SI: Study on NR Network-controlled Repeaters"

### SUMMARY

A communication method according to a first aspect is a communication method used in a relay apparatus including a relay device configured to perform a relay operation of relaying a radio signal transmitted between a network and a user equipment, and a control terminal configured to receive from the network a control signal used for control of the relay device, the communication method including the steps of: transitioning, by the control terminal, to a radio resource control (RRC) connected state in a cell included in the network; determining whether a condition is satisfied for incorporating notification information indicating that a host apparatus is the relay apparatus into a message to be transmitted from the control terminal to the cell; and transmitting the message including the notification information from the control terminal to the cell in response to determining that the condition is satisfied.

A communication method according to a second aspect is a communication method used in a relay apparatus including a relay device configured to perform a relay operation of relaying a radio signal transmitted between a network and a user equipment, and a control terminal configured to receive from the network a control signal used for control of the relay device, the communication method including the steps of: initiating, by the control terminal in a radio resource control (RRC) connected state, an RRC connection reestablishment procedure for a cell included in the network; incorporating, into an RRC reestablishment request message, a relay apparatus-dedicated radio network temporary identifier (RNTI) assigned to the relay apparatus or notification information indicating that a host apparatus is the relay apparatus; and transmitting, from the control terminal to the cell, the RRC reestablishment request message including the relay apparatus-dedicated RNTI or the notification information.

### BRIEF DESCRIPTION OF THE DRAWINGS

FIG. 1 is a diagram illustrating a configuration of a mobile communication system according to an embodiment.
FIG. 2 is a diagram illustrating a configuration of a protocol stack of a wireless interface of a user plane handling data.
FIG. 3 is a diagram illustrating a configuration of a protocol stack of a wireless interface of a control plane handling signaling (control signal).
FIG. 4 is a diagram illustrating an example of an application scenario of the NCR apparatus (relay apparatus) according to a first embodiment.
FIG. 5 is a diagram illustrating an example of an application scenario of the NCR apparatus according to the first embodiment.
FIG. 6 is a diagram illustrating an example of a control method for the NCR apparatus according to the first embodiment.
FIG. 7 is a diagram illustrating an example of a configuration of a protocol stack in a mobile communication system including the NCR apparatus according to the first embodiment.
FIG. 8 is a diagram illustrating a specific configuration example of the mobile communication system including the NCR apparatus according to the first embodiment.
FIG. 9 is a diagram illustrating a configuration example of the NCR apparatus according to the first embodiment.
FIG. 10 is a diagram illustrating a configuration of a user equipment (UE) according to the embodiment.
FIG. 11 is a diagram illustrating an example of a configuration of a gNB (base station) according to the embodiment.
FIG. 12 is a diagram illustrating operation according to the first embodiment.
FIG. 13 is a diagram illustrating an operation example of an NCR-MT (control terminal) according to the first embodiment.
FIG. 14 is a diagram illustrating an operation example of an NCR-MT according to a variation of the first embodiment.
FIG. 15 is a diagram illustrating RRC connection reestablishment in the NCR-MT according to a second embodiment.
FIG. 16 is a diagram illustrating an RRC reestablishment request (RRC reestablishment request) message specified in a 3GPP RRC technical specification (TS38.331).
FIG. 17 is a diagram illustrating an operation example of the NCR-MT according to the second embodiment.
FIG. 18 is a diagram illustrating an RIS apparatus (relay apparatus) according to a third embodiment.
FIG. 19 is a diagram illustrating an RIS apparatus (relay apparatus) according to the third embodiment.

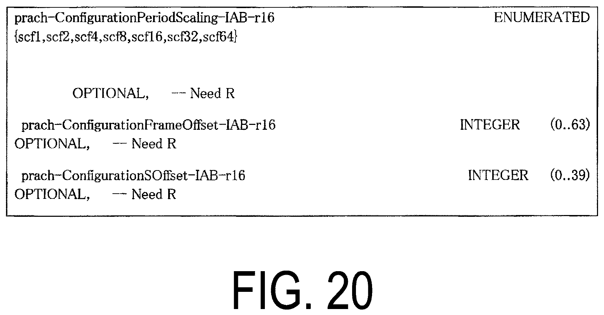

FIG. 20 is a diagram illustrating a specific PRACH scene (RO) for avoiding a possibility of collision.

### DESCRIPTION OF EMBODIMENTS

A mobile communication system according to an embodiment is described with reference to the drawings. In the description of the drawings, the same or similar parts are denoted by the same or similar reference signs.

### (1) First Embodiment

A first embodiment will be described. A relay apparatus according to an embodiment is a repeater apparatus (that is, an NCR apparatus) that can be controlled from a network.

### (1.1) Overview of Mobile Communication System

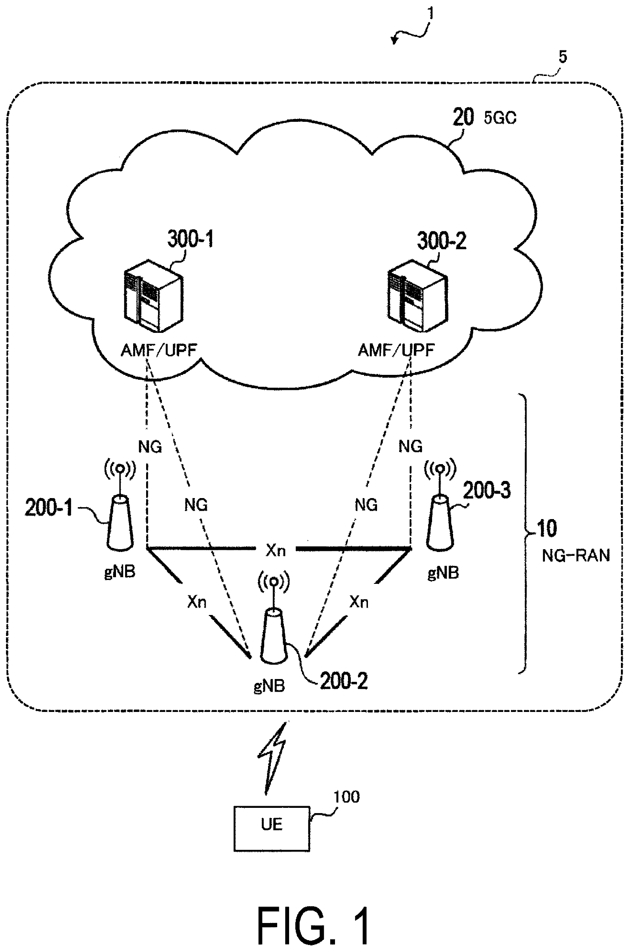

FIG. 1 is a diagram illustrating a configuration of a mobile communication system according to an embodiment.

The mobile communication system 1 complies with the 5th Generation System (5GS) of the 3rd Generation Partnership Project (3GPP) (registered trademark; the same applies hereinafter). Hereinafter, 5GS will be described by way of example, but a long term evolution (LTE) system may be at least partially applied to the mobile communication system. Alternatively, a sixth generation (6G) system may be at least partially applied to the mobile communication system.

The mobile communication system 1 includes a user equipment (UE) 100, a 5G radio access network (NG-RAN: Next Generation Radio Access Network) 10, and a 5G core network (5GC: 5G Core Network) 20. Hereinafter, the NG-RAN 10 may be simply referred to as a RAN 10. The 5GC 20 may be simply referred to as a core network (CN) 20. The RAN 10 and the CN 20 constitute a network 5 of the mobile communication system 1.

The UE 100 is a mobile wireless communication apparatus. The UE 100 may be any apparatus as long as the UE 100 is used by a user. Examples of the UE 100 include a mobile phone terminal (including a smartphone), a tablet terminal, a laptop PC, a communication module (including a communication card or a chipset), a sensor or an apparatus provided on the sensor, a vehicle or an apparatus provided on the vehicle (vehicle UE), and a flying object or an apparatus provided on the flying object (Aerial UE).

The NG-RAN 10 includes a base station (referred to as "gNB" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter, simply referred to as a "frequency").

The gNB 200 may be functionally divided into a central unit (CU) and a distributed unit (DU). The CU controls the DU. The CU is a unit including upper layers included in a protocol stack described below, such as an RRC layer, an SDAP layer, and a PDCP layer, for example. The CU is connected to a core network via an NG interface which is a backhaul interface. The CU is connected to an adjacent base station via the Xn interface, which is an inter-base station interface. The DU forms a cell. The DU 202 is a unit including lower layers included in the protocol stack described below, such as an RLC layer, a MAC layer, and a PHY layer, for example. The DU is connected to the CU via an F1 interface which is a fronthaul interface.

The gNB can be connected to an evolved packet core (EPC) corresponding to a core network of LTE. An LTE base station can also be connected to the 5GC. The LTE base station and the gNB can be connected via an inter-base station interface.

The 5GC 20 includes an access and mobility management function (AMF) and a user plane function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

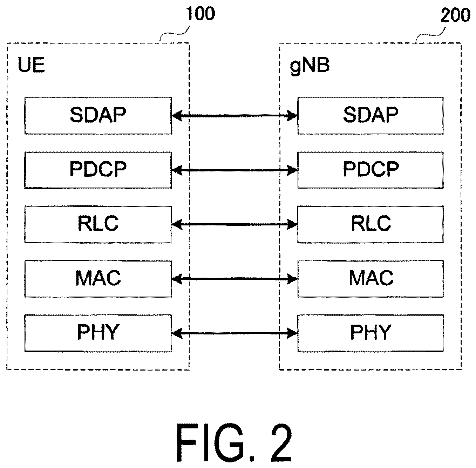

FIG. 2 is a diagram illustrating a configuration of a protocol stack of a wireless interface of a user plane handling data.

The user plane radio interface protocol includes a physical (PHY) layer, a medium access control (MAC) layer, a radio link control (RLC) layer, a packet data convergence protocol (PDCP) layer, and a service data adaptation protocol (SDAP) layer.

The PHY layer performs encoding/decoding, modulation/demodulation, antenna mapping/demapping, and resource mapping/demapping. Data and control information are transmitted between the PHY layer of the UE 100 and the PHY layer of the gNB 200 via a physical channel. The PHY layer of the UE 100 receives downlink control information (DCI) transmitted from the gNB 200 over a physical downlink control channel (PDCCH). Specifically, the UE 100 performs blind decoding of PDCCH using a radio network temporary identifier (RNTI) and acquires successfully decoded DCI as DCI addressed to the UE. The DCI transmitted from the gNB 200 is added with a cyclic redundancy code (CRC) bit scrambled by the RNTI.

The gNB 200 transmits a synchronization signal block (SSB: Synchronization Signal/PBCH block). For example, the SSB includes four consecutive Orthogonal Frequency Division Multiplex (OFDM) symbols, and a primary synchronization signal (PSS), a secondary synchronization signal (SSS), a physical broadcast channel (PBCH)/master information block (MIB), and a demodulation reference signal (DMRS) of the PBCH are disposed. A bandwidth of the SSB is, for example, a bandwidth of 240 consecutive subcarriers, that is, 20RB.

The MAC layer performs data priority control, retransmission processing using hybrid automatic repeat reQuest (HARQ), random access procedure, and the like.
Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the receiving side using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between IP flows, which are units for quality of service (QoS) control in the core network, and radio bearers, which are units for QoS control in an access stratum (AS). Note that, when the RAN is connected to the EPC, the SDAP need not be provided.

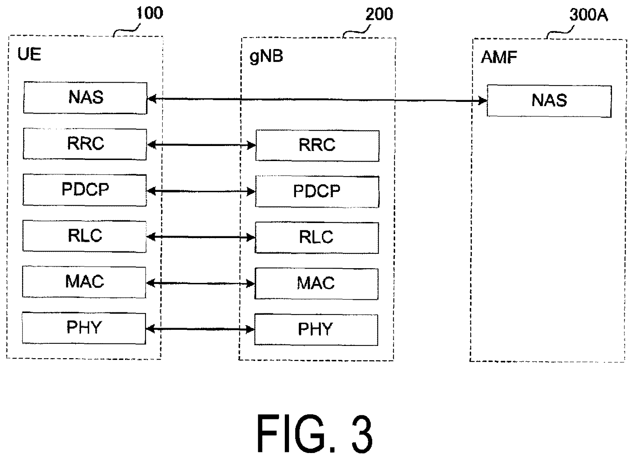

FIG. 3 is a diagram illustrating a configuration of a protocol stack of a wireless interface of a control plane handling signaling (a control signal).

The protocol stack of the wireless interface of the control plane includes a Radio Resource Control (RRC) layer and a Non-Access Stratum (NAS) layer instead of the SDAP layer illustrated in FIG. 2.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection (RRC connection) between the RRC of the UE 100 and the RRC of the gNB 200 is present, the UE 100 is in an RRC connected state. When no connection (RRC connection) between the RRC of the UE 100 and the RRC of the gNB 200 is present, the UE 100 is in an RRC idle state. When the connection between the RRC of the UE 100 and the RRC of the gNB 200 is suspended, the UE 100 is in an RRC inactive state.

The NAS layer, which is located above the RRC layer, performs session management, mobility management, and the like. NAS signaling is transmitted between the NAS layer of the UE 100 and the NAS layer of an AMF 300A. The UE 100 includes an application layer other than the protocol of the radio interface. A layer lower than the NAS layer is referred to as an AS layer.

### (1.2) Example of Application Scenario of Relay Apparatus

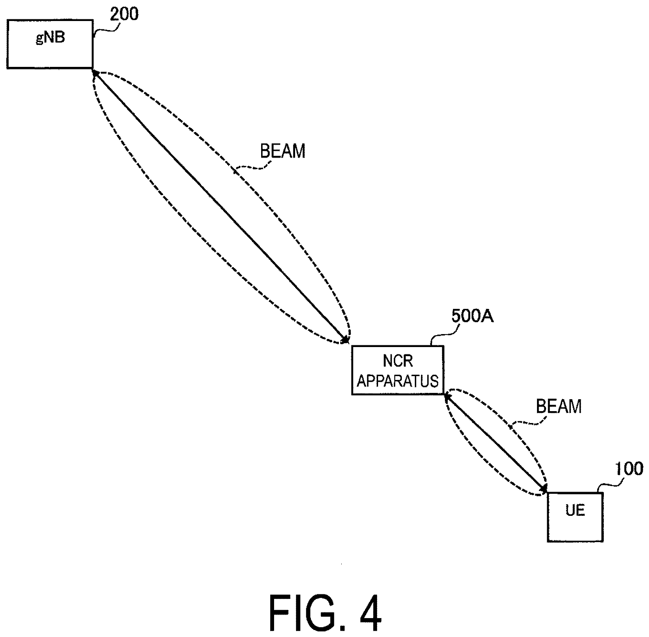

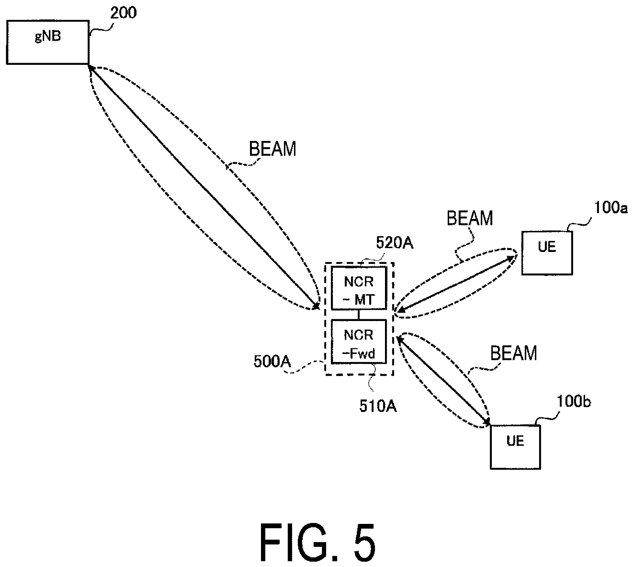

FIGs. 4 and 5 are diagrams showing an example of an application scenario of an NCR apparatus according to an embodiment.

The 5G/NR is capable of wide-band transmission via a high frequency band compared to the 4G/LTE. Since radio signals in the high frequency band such as a millimeter wave band or a terahertz wave band have high rectilinearity, a problem is reduction of coverage of the gNB 200. In FIG. 4, the UE 100 may be located outside a coverage area of the gNB 200, for example, outside an area where the UE 100 can receive radio signals directly from the gNB 200. The UE 100 may not communicate with the gNB 200 within a line of sight because of obstacles existing between the gNB 200 and the UE 100.

As illustrated in FIG. 4, a repeater apparatus (500A) that is a type of relay apparatus that relays radio signals between the gNB 200 and the UE 100, which is the NCR apparatus 500A that can be controlled from a network, is introduced into the mobile communication system 1. Such a repeater apparatus may be called a smart repeater apparatus.

For example, the NCR apparatus 500A amplifies a radio signal (radio wave) received from the gNB 200 and transmits the radio signal through directional transmission. To be specific, the NCR apparatus 500A receives a radio signal transmitted by the gNB 200 through beamforming. The NCR apparatus 500A amplifies the received radio signal without demodulation and modulation and transmits the amplified radio signal through the directional transmission. Here, the NCR apparatus 500A may transmit the radio signal with a fixed directivity (beam). The NCR apparatus 500A may transmit a radio signal with a variable (adaptive) directional beam. This can efficiently extend the coverage of the gNB 200.

Also, as illustrated in FIG. 5, a new UE (hereinafter referred to as "NCR-MT (Mobile termination)") 100B, which is a type of control terminal for controlling the NCR apparatus 500A, is introduced. That is, the NCR apparatus 500A includes an NCR-Fwd (Forward) 510A, which is a type of a relay device that relays a radio signal transmitted between the gNB 200 and the UE 100, specifically, changes a propagation state of the radio signal without demodulating or modulating the radio signal, and an NCR-MT 520A that performs wireless communication with the gNB 200 to control the NCR-Fwd 510A. Thus, the NCR-MT 520A controls the NCR apparatus 500A in cooperation with the gNB 200 by establishing a wireless connection to the gNB 200 and performing wireless communication to the gNB 200. Accordingly, efficient coverage extension can be realized using the NCR apparatus 500A. The NCR-MT 520A controls the NCR apparatus 500A according to control from the gNB 200. The NCR-MT 520A also has the same function as that of the UE 100.

The NCR-MT 520A may be configured separately from the NCR-Fwd 510A. For example, the NCR-MT 520A may be located near the NCR-Fwd 510A and may be electrically connected to the NCR-Fwd 510A. The NCR-MT 520A may be connected to the NCR-Fwd 510A by wire or wireless. Alternatively, the NCR-MT 520A may be configured integrally with the NCR-Fwd 510A. The NCR-MT 520A and the NCR-Fwd 510A may be fixedly installed at a coverage edge (cell edge) of the gNB 200, or on a wall surface or window of any building, for example. The NCR-MT 520A and the NCR-Fwd 510A may be installed, for example, in a vehicle or the like and may be mobile. One NCR-MT 520A may control the plurality of NCR-Fwds 510A.

The configuration is not limited to a configuration in which the NCR-MT 520A directly controls one or more NCR-Fwds 510A, and may be configuration in which the NCR-MT 520A indirectly controls one or more NCR-Fwds 510A. For example, the NCR-MT 520A may control one or more NCR-Fwds 510A via an upper layer (for example, an application layer).

In the example illustrated in FIG. 5, the NCR apparatus 500A (NCR-Fwd 510A) dynamically or quasi-statically changes a beam to be transmitted or received. For example, the NCR-Fwd 510A forms a beam toward each of a UE 100a and a UE 100b. The NCR-Fwd 510A may also form a beam toward the gNB 200. For example, in a communication resource between the gNB 200 and the UE 100a, the NCR-Fwd 510A transmits a radio signal received from the gNB 200 toward the UE 100a through beamforming and/or transmits a radio signal received from the UE 100a toward the gNB 200 through beamforming. In a communication resource between the gNB 200 and the UE 100b, the NCR-Fwd 510A transmits the radio signal received from the gNB 200 toward the UE 100b through beamforming and/or transmits the radio signal received from the UE 100b toward the gNB 200 through beamforming. Instead of or in addition to the beamforming, the NCR-Fwd 510A may perform null forming (so-called null steering) toward the UE 100 which is not a communication partner (not illustrated) and/or a neighboring gNB 200 (not illustrated) to curb interference.

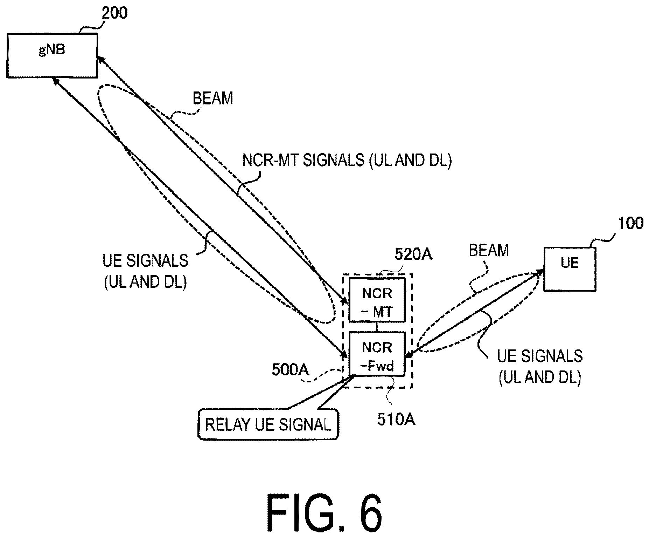

FIG. 6 is a diagram illustrating an example of a control method for the NCR apparatus 500A according to the embodiment. As illustrated in FIG. 6, the NCR-Fwd 510A relays radio signals (also referred to as "UE signals") between the gNB 200 and the UE 100. The UE signal includes an uplink signal transmitted from the UE 100 to the gNB 200 (referred to as "UE-UL signal") and a downlink signal transmitted from the gNB 200 to the UE 100 (referred to as "UE-DL signal"). The NCR-Fwd 510A relays the UE-UL signal from the UE 100 to the gNB 200 and relays the UE-DL signal from the gNB 200 to the UE 100. The radio link between the NCR-Fwd 510A and the UE 100 is also referred to as an "access link". The radio link between the NCR-Fwd 510A and the gNB 200 is also referred to as a "backhaul link".

The NCR-MT 520A transmits and receives a radio signal (herein referred to as an "NCR-MT signal") to and from the gNB 200. The NCR-MT signal includes an uplink signal transmitted from the NCR-MT 520A to the gNB 200 (referred to as an "NCR-MT-UL signal"), and a downlink signal transmitted from the gNB 200 to the NCR-MT 520A (referred to as an "NCR-MT-DL signal"). The NCR-MT-DL signal includes signaling for controlling the NCR apparatus 500A (for example, an NCR control signal). A wireless link between the NCR-MT 520A and the gNB 200 is also referred to as a "control link."

The gNB 200 directs a beam to the NCR-MT 520A based on the NCR-MT-UL signal from the NCR-MT 520A. Since the NCR apparatus 500A and the NCR-MT 520A are co-located, the beam is also eventually directed to the NCR-Fwd 510A when the backhaul link and the control link have the same frequency and the gNB 200 directs a beam to the NCR-MT 520A. The gNB 200 transmits the NCR-MT-DL signal and the UE-DL signal using the beam. The NCR-MT 520A receives the NCR-MT-DL signal. When the NCR-Fwd 510A and the NCR-MT 520A are at least partially integrated, a function (for example, antennas) for transmitting or receiving, or relaying UE signals and/or NCR-MT signals may be integrated in the NCR-Fwd 510A and the NCR-MT 520A. The beam includes a transmission beam and/or a reception beam. The beam is a general term for transmission and/or reception under control for maximizing power of a transmission wave and/or a reception wave in a specific direction by adjusting/adapting an antenna weight or the like.

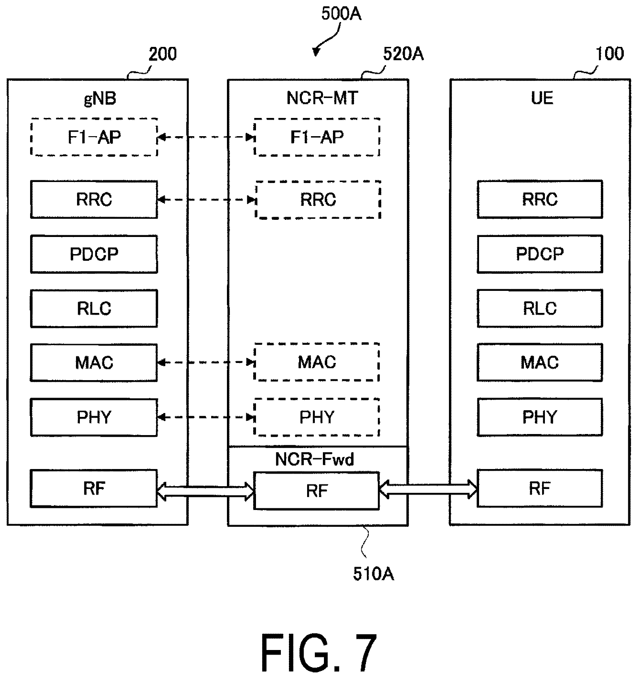

FIG. 7 is a diagram illustrating an example of a configuration of a protocol stack in the mobile communication system 1 having the NCR apparatus 500A according to an embodiment. The NCR-Fwd 510A relays a radio signal transmitted and received between the gNB 200 and the UE 100. The NCR-Fwd 510A has a Radio Frequency (RF) function of amplifying and relaying a received radio signal, and performs directional transmission through beamforming (for example, analog beamforming).

The NCR-MT 520A includes at least one layer (entity) selected from the group consisting of PHY, MAC, RRC, and application protocol (F1-AP). The F1-AP is a type of a fronthaul interface. The NCR-MT 520A exchanges signaling with the gNB 200 using at least one of PHY, MAC, RRC, and F1-AP. When the NCR-MT 520A is a type or part of a base station, the NCR-MT 520A may exchange signaling with the gNB 200 using an Xn AP (Xn-AP), which is an interface between base stations. The NCR-MT 520A may also include a NAS layer (entity). The NAS layer allows the NCR-MT 520A to exchange signaling with the AMF 300A. The NAS layer may constitute an upper layer for the NCR-MT 520A.

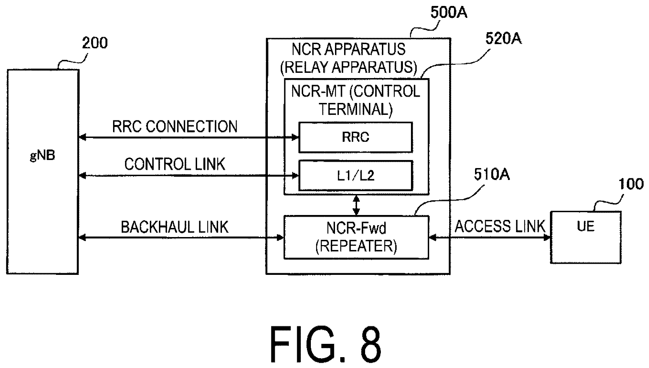

FIG. 8 is a diagram illustrating a specific example of a configuration of the mobile communication system 1 including the NCR apparatus 500A according to the embodiment.

backhaul link is established between the gNB 200 and the NCR-Fwd 510A. An access link is established between the UE 100 and the NCR-Fwd 510A. The NCR-Fwd 510A relays a radio signal transmitted between the gNB 200 and the UE 100 via the backhaul link and the access link. The NCR-Fwd 510A changes a propagation state of the radio signal without demodulating or modulating the radio signal.

Further, a control link is established between the gNB 200 and layer 1 and/or layer 2 (L1/L2) of the NCR-MT 520A. The L1/L2 of the NCR-MT 520A transmits and receives L1/L2 signaling to and from the gNB 200 via the control link. An RRC connection is established between the gNB 200 and the RRC of the NCR-MT 520A. The RRC of the NCR-MT 520A transmits and receives an RRC message to and from the gNB 200 via the RRC connection. The NCR-MT 520A receives downlink signaling (also referred to as an "NCR control signal" or simply "control signal") from the gNB 200 via the RRC connection and/or the control link.

The gNB 200 (transmitter 210) transmits the NCR control signal to the NCR-MT 520A. The NCR control signal may be an RRC message, which is a control signal of the RRC layer (that is, layer 3). The NCR control signal may be a MAC control element (CE), which is a control signal of the MAC layer (that is, layer 2). The NCR control signal may be downlink control information (DCI), which is a control signal of the PHY layer (that is, layer 1). The NCR control signal may be UE-specific signaling. The NCR control signal may be broadcast signaling. The NCR control signal may be a fronthaul message (for example, F1-AP message). When the NCR-MT 520A is a type or part of a base station, the NCR-MT 520A may communicate with the gNB 200 via an AP of Xn (Xn-AP), which is an inter-base station interface.

Hereinafter, the NCR control signal transmitted in the RRC message (and/or MAC CE) and used for static or semi-static control of the NCR-Fwd 510A is also referred to as "NCR configuration information" or simply "configuration information". Here, the RRC message may be an RRC reconfiguration message. The NCR configuration information includes, for example, information for configuring ON/OFF of the NCR-Fwd 510A. The NCR configuration information may include, for example, information for semi-static beam configuration of the NCR-Fwd 510A.

On the other hand, the NCR control signal transmitted in the L1/L2 signaling, that is, the DCI (and/or MAC CE) and used for dynamic control of the NCR-Fwd 510A is also referred to as "NCR control information" or simply "control information". The NCR control information may be referred to as side control information (SCI). CRC bits of the PDCCH carrying the NCR control information are scrambled by a newly introduced dedicated RNTI. The dedicated RNTI is also referred to as "NCR-RNTI". The NCR control information may include, for example, information for dynamic beam control of the NCR-Fwd 510A. The NCR configuration information may include information for instructing dynamic On/Off of the NCR-Fwd 510A.

For example, when the NCR-MT 520A is in an RRC connected state, the NCR apparatus 500A can turn on or off the NCR-Fwd 510A according to the NCR control information (SCI) received from the gNB 200. On the other hand, after the NCR-MT 520A transitions to an RRC inactive state, the NCR apparatus 500A can turn on or off the NCR-Fwd 510A according to the latest (last) configuration information received from the gNB 200.

Further, the NCR control signal (for example, NCR configuration information by RRC and/or NCR control information by L1/L2 signaling) held by the NCR apparatus 500A (NCR-MT 520A) may be referred to as an NCR-Fwd context.

Also, when a radio link failure (RLF) with the gNB 200 is detected by the NCR-MT 520A, the NCR-MT 520A executes cell selection and triggers RRC connection re-establishment (also referred to as "RRC re-establishment"). Here, when the NCR-MT 520A enters the RRC idle state because a suitable cell cannot be found in the cell selection, the NCR apparatus 500A turns off the NCR-Fwd 510A. The NCR-Fwd 510A is off during an RRC connection re-establishment procedure.

The NCR control signal may include frequency control information for designating a center frequency of a radio signal (for example, a component carrier) that is a relay target in the NCR-Fwd 510A. When the NCR control signal received from the gNB 200 includes the frequency control information, the NCR-MT 520A (controller 523) controls the NCR-Fwd 510A such that the NCR-Fwd 510A relays a radio signal whose center frequency is indicated by the frequency control information as a target (step S2A). The NCR control signal may include a plurality of pieces of frequency control information for designating center frequencies different from each other. Since the NCR control signal includes the frequency control information, the gNB 200 can designate the center frequency of the radio signal to be relayed by the NCR-Fwd 510A via the NCR-MT 520A.

The NCR control signal may include mode control information for designating an operation mode of the NCR-Fwd 510A. The mode control information may be associated with the frequency control information (center frequency). The operation mode may be any one of a mode in which the NCR-Fwd 510A performs non-directional transmission and/or reception, a mode in which the NCR-Fwd 510A performs fixed-directional transmission and/or reception, a mode in which the NCR-Fwd 510A performs transmission and/or reception with a variable directional beam, and a mode in which the NCR-Fwd 510A performs Multiple Input Multiple Output (MIMO) relay transmission. The operation mode may be either a beamforming mode (that is, a mode in which improvement of a desired wave is emphasized) and a null steering mode (that is, a mode in which curbing of an interference wave is emphasized). When the NCR control signal received from the gNB 200 includes the mode control information, the NCR-MT 520A (controller 523) controls the NCR-Fwd 510A such that the NCR-Fwd 510A operates in the operation mode indicated by the mode control information (step S2A). Since the NCR control signal includes the mode control information, the gNB 200 can designate the operation mode of the NCR-Fwd 510A via the NCR-MT 520A.

Here, a mode in which the NCR apparatus 500A performs omnidirectional transmission and/or reception is a mode in which the NCR-Fwd 510A performs relaying in all directions, and may be referred to as an omni mode. The mode in which the NCR-Fwd 510A performs fixed-directional transmission and/or reception may be a directivity mode realized by one directional antenna. The mode may be a beamforming mode realized by applying fixed phase and amplitude control (antenna weight control) to a plurality of antennas. Any of these modes may be designated (set) from the gNB 200 to the NCR-MT 520A. The mode in which the NCR-Fwd 510A performs transmission and/or reception with a variable directional beam may be a mode for performing analog beamforming. The mode may be a mode in which digital beamforming is performed. The mode may be a mode in which hybrid beamforming is performed. The mode may be a mode for forming an adaptive beam specific to the UE 100. Any of these modes may be designated (set) from the gNB 200 to the NCR-MT 520A. In the operation mode in which beamforming is performed, beam control information to be described below may be provided from the gNB 200 to the NCR-MT 520A. The mode in which the NCR apparatus 500A performs MIMO relay transmission may be a mode for performing single-user (SU) spatial multiplexing. The mode may be a mode for performing Multi-User (MU) spatial multiplexing. The mode may be a mode for performing transmission diversity. Any of these modes may be designated (set) from the gNB 200 to the NCR-MT 520A. The operation mode may include a mode in which relay transmission by the NCR-Fwd 510A is turned on (activated) and a mode in which the relay transmission by the NCR-Fwd 510A is turned off (deactivated). Any of these modes may be designated (set) from the gNB 200 to the NCR-MT 520A in the NCR control signal.

The NCR control signal may include beam control information for designating a transmission direction, a transmission weight, or a beam pattern when the NCR-Fwd 510A performs directional transmission. The beam control information may be associated with the frequency control information (center frequency). The beam control information may include a precoding matrix indicator (PMI). The beam control information may include beamforming angle information. When the NCR control signal received from the gNB 200 includes beam control information, the NCR-MT 520A (controller 523) controls the NCR-Fwd 510A to form a transmission directivity (beam) indicated by the beam control information. When the NCR control signal includes the beam control information, the gNB 200 can control the transmission directivity of the NCR apparatus 500A via the NCR-MT 520A.

The NCR control signal may include output control information for designating a degree to which the NCR-Fwd 510A amplifies the radio signal (amplification gain) or the transmission power. The output control information may be information indicating a difference value (that is, a relative value) between a current amplification gain or transmission power and a target amplification gain or transmission power. When the NCR control signal received from the gNB 200 includes output control information, the NCR-MT 520A (controller 523) controls the NCR-Fwd 510A so that the NCR-Fwd 510A performs change to the amplification gain or transmission power indicated by the output control information. The output control information may be associated with frequency control information (center frequency). The output control information may be information for designating any one of an amplification gain, a beamforming gain, and an antenna gain of the NCR-Fwd 510A. The output control information may be information for designating transmission power of the NCR-Fwd 510A.

When one NCR-MT 520A controls the plurality of NCR-Fwds 510A, the gNB 200 (transmitter 210) may transmit an NCR control signal to the NCR-MT 520A for each NCR-Fwd 510A. In this case, the NCR control signal may include an identifier of the corresponding NCR-Fwd 510A (NCR identifier). The NCR-MT 520A (controller 523) controlling the plurality of NCR-Fwds 510A determines the NCR-Fwd 510A to which the NCR control signal is applied, based on the NCR identifier included in the NCR control signal received from the gNB 200. The NCR identifier may be transmitted together with the NCR control signal from the NCR-MT 520A to the gNB 200 even when the NCR-MT 520A controls only one NCR-Fwd 510A.

Thus, the NCR-MT 520A (controller 523) controls the NCR-Fwd 510A based on the NCR control signal from the gNB 200. This enables the gNB 200 to control the NCR-Fwd 510A via the NCR-MT 520A.

### (1.3) Example of Configuration of Each Apparatus

An example of a configuration of each apparatus in the mobile communication system 1 according to the embodiment will be described.

### (1.3.1) Example of Configuration of Relay Apparatus

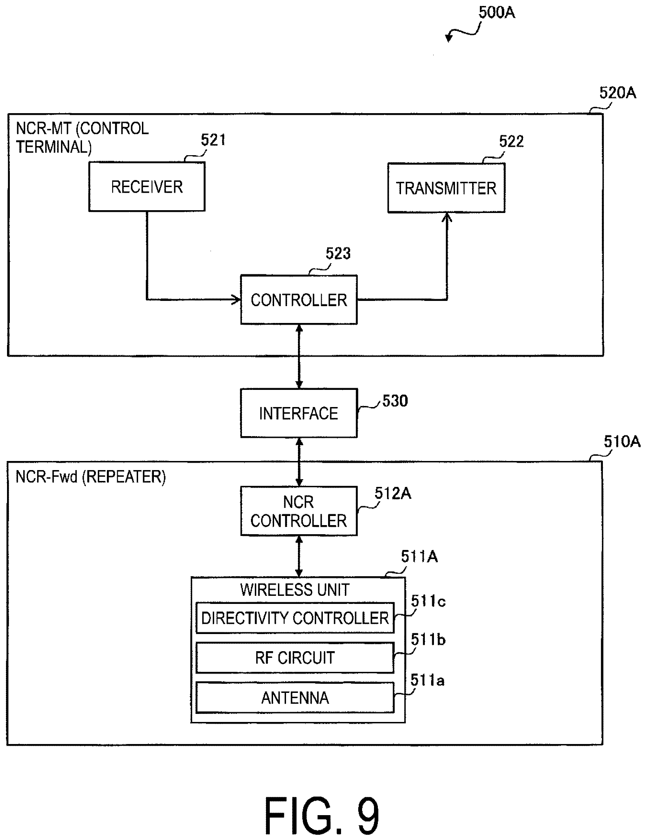

FIG. 9 is a diagram illustrating an example of a configuration of the NCR apparatus 500A (relay apparatus) according to the embodiment. The NCR apparatus 500A includes an NCR-Fwd 510A, an NCR-MT 520A, and an interface 530.

The NCR-Fwd 510A includes a wireless unit 511A and an NCR controller 512A. The wireless unit 511A includes an antenna 511a including a plurality of antennas (a plurality of antenna elements), an RF circuit 511b including an amplifier, and a directivity controller 511c that controls directivity of the antenna 511a. The RF circuit 511b amplifies and relays (transmits) radio signals transmitted and received by the antenna 511a. The RF circuit 511b may convert a radio signal, which is an analog signal, into a digital signal, and reconvert the digital signal into an analog signal after digital signal processing. The directivity controller 511c may perform analog beamforming through analog signal processing. The directivity controller 511c may perform digital beamforming through digital signal processing. The directivity controller 511c may perform analog and digital hybrid beamforming. The NCR controller 512A controls the wireless unit 511A in response to a control signal from the NCR-MT 520A. The NCR controller 512A may include at least one processor.

The NCR-MT 520A includes a receiver 521, a transmitter 522, and a controller 523. The receiver 521 performs various types of reception under control of the controller 523. The receiver 521 includes an antenna and a reception device. The reception device converts a radio signal received by the antenna (radio signal) into a baseband signal (a reception signal) and outputs the reception signal to the controller 523. The transmitter 522 performs various types of transmission under control of the controller 523. The transmitter 522 includes an antenna and a transmission device. The transmission device converts a baseband signal (a transmission signal) output by the controller 523 into a radio signal and transmits the radio signal from the antenna. The controller 523 performs various types of controls in the NCR-MT 520A. The operation of the NCR-MT 520A (and the NCR apparatus 500A) described above and to be described below may be an operation controlled by the controller 523. The controller 523 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing. The controller 523 executes a function of at least one layer selected from the group consisting of the PHY, the MAC, the RRC, and the F1-AP.

The interface 530 electrically or logically connects the NCR-Fwd 510A and the NCR-MT 520A. The controller 523 of the NCR-MT 520A controls the NCR-Fwd 510A via the interface 530. The interface 530 may be a logical entity of an upper layer (for example, an application layer).

In an embodiment, the receiver 521 of the NCR-MT 520A receives signaling (NCR control signal) used to control the NCR apparatus 500A from the gNB 200 through wireless communication. The controller 523 of the NCR-MT 520A controls the NCR apparatus 500A based on the signaling. This enables the gNB 200 to control the NCR-Fwd 510A via the NCR-MT 520A.

### (1.3.2) Example of Configuration of User Equipment

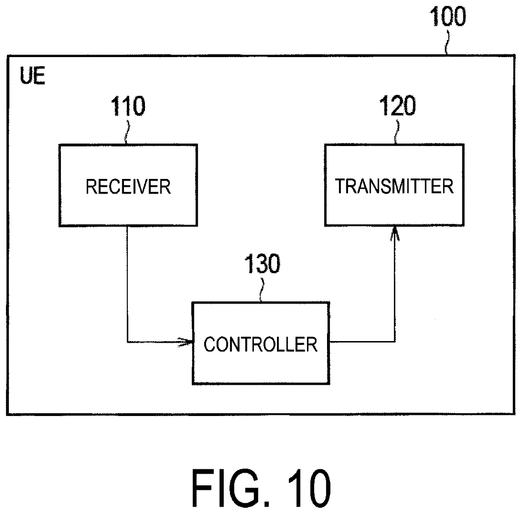

FIG. 10 is a diagram illustrating a configuration of the UE 100 (user equipment) according to an embodiment. The UE 100 includes a receiver 110, a transmitter 120, and a controller 130. The receiver 110 and the transmitter 120 constitute a wireless communicator that performs wireless communication with the gNB 200.

The receiver 110 performs various receptions under the control of the controller 130. The receiver 110 includes an antenna and a reception device. The reception device converts a radio signal received through the antenna into a baseband signal (a reception signal) and outputs the resulting signal to the controller 130.

The transmitter 120 performs various transmissions under the control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various controls and processes in the UE 100. Such processing includes processing of respective layers to be described later. The operations of the UE 100 described above and to be described below may also be an operation under the control of the controller 130. The controller 130 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

### (1.3.3) Example of Configuration of Base Station

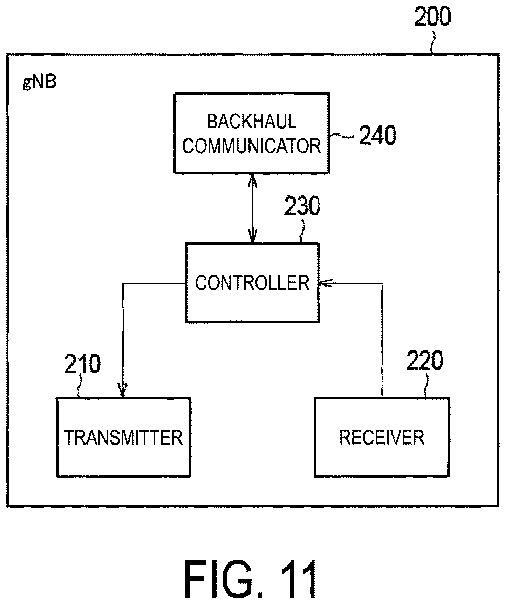

FIG. 11 is a diagram illustrating an example of a configuration of the gNB 200 (base station) according to an embodiment. The gNB 200 includes a transmitter 210, a receiver 220, a controller 230, and a backhaul communicator 240.

The transmitter 210 performs various transmissions under the control of the controller 230. The transmitter 210 includes an antenna and a transmission device. The transmission device converts a baseband signal (a transmission signal) output by the controller 230 into a radio signal and transmits the resulting signal through the antenna. The receiver 220 performs various types of reception under control of the controller 230. The receiver 220 includes an antenna and a reception device. The reception device converts a radio signal received through the antenna into a baseband signal (a reception signal) and outputs the resulting signal to the controller 230. The transmitter 210 and the receiver 220 may be capable of beamforming using a plurality of antennas.

The controller 230 performs various types of control for the gNB 200. The operation of the gNB 200 described above and to be described below may be an operation under the control of the controller 230. The controller 230 includes at least one processor and at least one memory. The memory stores a program to be executed by the processor and information to be used for processing in the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via the inter-base station interface. The backhaul communicator 240 is connected to the AMF/UPF 300 via the interface between a base station and the core network. The gNB may include a Central Unit (CU) and a Distributed Unit (DU) (that is, functions are divided), and both units may be connected via an F1 interface.

In the embodiment, the transmitter 210 of the gNB 200 transmits signaling (NCR control signal) used for control of the NCR-Fwd 510A to the NCR-MT 520A through wireless communication. This enables the gNB 200 to control the NCR apparatus 500A via the NCR-MT 520A.

### (1.4) Operation according to First Embodiment

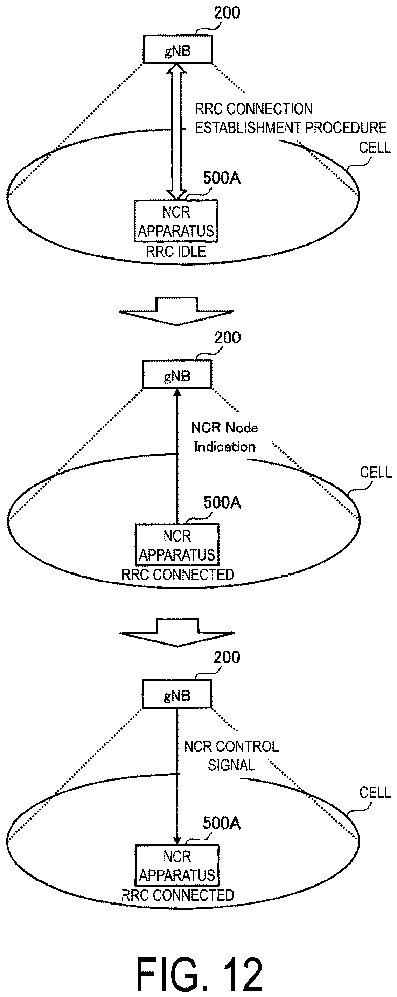

FIG. 12 is a diagram illustrating operation according to the first embodiment.

First, the NCR-MT 520A (the NCR apparatus 500A) in the RRC idle state in the cell of the gNB 200, that is, the NCR-MT 520A camping on the cell, initiates an RRC connection establishment procedure. The RRC connection establishment procedure includes transmission of an RRC setup request message from the NCR-MT 520A to the gNB 200, transmission of the RRC setup message from the gNB 200 to the NCR-MT 520A, and transmission of an RRC setup completion message from the NCR-MT 520A to the gNB 200. The RRC setup completion message corresponds to message 5 (Msg5) in a random access procedure. The NCR-MT 520A transitions to the RRC connected state through the RRC connection establishment procedure.

Second, the NCR-MT 520A transmits a message including notification information indicating that the host apparatus is an NCR (also referred to as "the NCR node indication" or "the NCR node indication IE") to the gNB 200. For example, the NCR-MT 520A transmits an RRC setup completion message (Msg5) including the NCR node indication, or a UE capability response message including the NCR node indication to the gNB 200. In response to receiving a UE capability enquiry message from the gNB 200, the NCR-MT 520A transmits a UE capability response message including information regarding the capability of the NCR-MT 520A to the gNB 200. The UE capability response message is also referred to as a UE capability information message. When the gNB 200 receives the NCR node indication, the gNB 200 can recognize that the apparatus connected to its own cell is the NCR-MT 520A (the NCR apparatus 500A) rather than the UE 100.

Third, the gNB 200 transmits the NCR control signal (particularly, the NCR configuration information) to the NCR-MT 520A. The NCR-MT 520A (the NCR apparatus 500A) controls the NCR-Fwd510A according to the received NCR control signal.

Thus, as the NCR node indication is transmitted from the NCR-MT 520A to the gNB 200, the gNB 200 can recognize that the apparatus connected to its own cell is the NCR-MT 520A (the NCR apparatus 500A) rather than the UE 100. This allows the gNB 200 to transmit the NCR control signal (particularly, the NCR configuration information) to the NCR-MT 520A.

However, when the desired cell is defined as a connection destination of the NCR-MT 520A, it is not preferable for the NCR-MT 520A to receive the NCR control signal from the undesired cell that is not the desired cell (that is, for the NCR-Fwd 510A to be controlled by the undesired cell).

Specifically, disposition of an RF repeater of the related art is determined by network planning and/or on-site RF measurement. Thus, the desired cell is planned for each the NCR apparatus 500A. That is, a correspondence relationship between the serving cell and the NCR apparatus 500A can be determined by network planning. Such a desired cell can be configured in the NCR apparatus 500A, for example, by a network operator entity (OAM: Operation Administration and Maintenance).

For the NCR apparatus 500A (the NCR-MT 520A), the desired cell may be configured by, for example, OAM. Here, the desired cell may be a cell planned so that the NCR-MT 520A connects to the cell. In this case, it is preferable for the NCR-MT 520A to avoid connecting to the undesired cell that is not the desired cell. The desired cell may be referred to as a planned cell. The undesired cell may be referred to as a non-planned cell or an unplanned cell.

Here, the desired cell may be a cell planned so that the NCR-MT 520A camps on and/or connects to the cell by network planning. A frequency to which the desired cell belongs is also referred to as a "desired frequency". Moreover, a cell that is not the desired cell is referred to as an "undesired cell", and a frequency that is not the desired frequency is referred to as an "undesired frequency". Information on the desired cell (for example, a cell ID of the desired cell), information on the undesired cell (for example, a cell ID of the undesired cell), information on the desired frequency (for example, a frequency ID of the desired frequency), and/or information on the undesired frequency (for example, a frequency ID of the undesired frequency) may be collectively referred to as "desired cell information". The desired cell information may include a list of cell IDs of respective desired cells, a list of cell IDs of respective undesired cells, a list of frequency IDs of respective desired frequencies, and/or a list of frequency IDs of respective desired frequencies. The desired cell information may be preset for the NCR-MT 520A from the OAM. The desired cell information may be preset in a memory of the NCR-MT 520A at the time of shipment from a factory. The desired cell information may be preset in the NCR-MT 520A from the gNB 200 or the AMF 300A. The NCR-MT 520A holds the preset desired cell information and uses the held desired cell information to determine whether to transmit the NCR node indication.

Alternatively, the desired cell may be a cell that has last provided the NCR control signal to the NCR-MT 520A, or a cell belonging to a frequency at which the NCR control signal has been last provided to the NCR-MT 520A. For example, when the NCR-MT 520A is in the RRC connected state in the cell, the NCR-MT 520A receives the NCR control signal from the cell and controls the NCR-Fwd 510A according to the received NCR control signal. The cell that has provided the NCR control signal to the NCR-MT 520A or the frequency at which the NCR control signal has been provided to the NCR-MT 520A can be considered to be a cell planned so that the NCR-MT 520A camps on the cell and/or connects to the cell. Therefore, all cells (or all frequencies) at which the NCR control signal has been provided to the NCR-MT 520A may be considered as desired cells (or desired frequencies). The NCR-MT 520A holds and manages desired cell information related to the cell and/or frequency at which the NCR control signal has been provided, and uses the held desired cell information to determine whether to transmit the NCR node indication.

Alternatively, the desired cell may be a cell that belongs to an operating frequency of the NCR-Fwd 510A. That is, the desired cell may be a cell that belongs to a frequency that the NCR-Fwd 510A can relay. Such desired cell information may be set in advance in the NCR-MT 520A from the OAM. Such desired cell information may be preset in the memory of the NCR-MT 520A at the time of shipment from the factory. Such desired cell information may be preset in the NCR-MT 520A from the gNB 200 or the AMF 300A.

The communication method according to the first embodiment is a method that is used in the NCR apparatus 500A including the NCR-Fwd 510A that performs a relay operation of relaying a radio signal transmitted between the network 5 and the UE 100, and the NCR-MT 520A that receives the NCR control signal used for control of the NCR-Fwd 510A from the network 5. First, the NCR-MT 520A transitions to the RRC connected state in a cell included in the network 5. Second, the NCR-MT 520A determines whether a condition is satisfied for incorporating the NCR node indication into a message to be transmitted from the NCR-MT 520A to the cell (the gNB 200). Third, the NCR-MT 520A transmits a message including the NCR node indication from the NCR-MT 520A to the cell (the gNB 200) in response to determining that the condition is satisfied. As described above, the message may be the RRC setup completion message (Msg5) or the UE capability response message.

In the first embodiment, the NCR-MT 520A determines whether a cell to which the NCR-MT 520A is connected (also referred to as a "connection cell") is the desired cell. In response to determining that the connection cell is the desired cell, the NCR-MT 520A transmits the message including the NCR node indication to the connection cell (the gNB 200). Further, the NCR-MT 520A may determine that the connection cell is the desired cell when a frequency of the cell to which the NCR-MT 520A is connected is the desired frequency. In response to determining that the connection cell belongs to the desired frequency, the NCR-MT 520A may transmit the message including the NCR node indication to the connection cell (the gNB 200).

Accordingly, when it is determined that the connection cell is not the desired cell (that is, the connection cell is the undesired cell), it is possible for the NCR-MT 520A not to transmit the NCR node indication to the connection cell (the gNB 200). This makes it easier to avoid the NCR-MT 520A receiving the NCR control signal from the undesired cell (that is, the NCR-Fwd 510A being controlled by the undesired cell).

In response to determining that the connection cell is not the desired cell, the NCR-MT 520A may transmit information for prompting the network 5 to transition from the RRC connected state to another RRC state (for example, RRC idle state) (also referred to as "release recommendation information") to the connection cell (the gNB 200). This allows the gNB 200 to cause the NCR-MT 520A to transition to, for example, the RRC idle state based on the release recommendation information from the NCR-MT 520A. As a result, it becomes easier for the NCR-MT 520A to reselect the desired cell through the cell reselection. Further, when handover or redirection of the NCR-MT 520A is possible, the NCR-MT 520A may transmit the desired cell information to the connection cell (the gNB 200), and the gNB 200 may cause the NCR-MT 520A to execute handover or redirection to the desired cell.

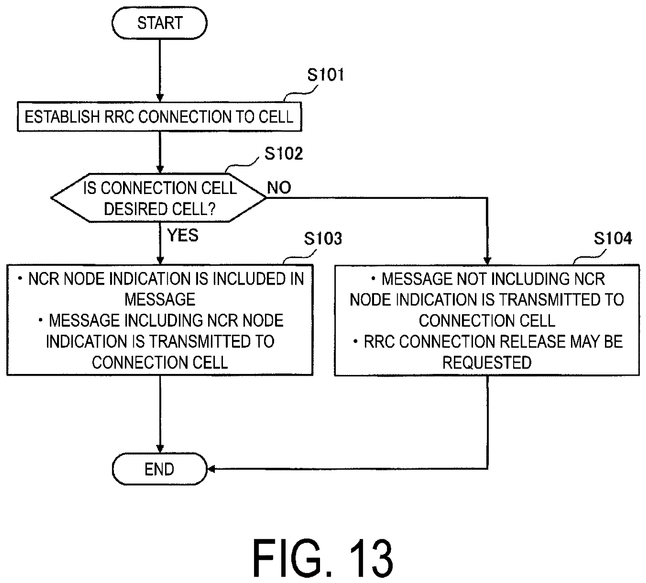

FIG. 13 is a diagram illustrating an operation example of the NCR-MT 520A according to the first embodiment.

In step S101, the NCR-MT 520A in the RRC idle state in the cell initiates the RRC connection establishment procedure with the cell, and establishes an RRC connection with the cell (the gNB 200).

In step S102, the NCR-MT 520A determines whether the connection cell is the desired cell.

When the connection cell is the desired cell (step S102: YES), the NCR-MT 520A incorporates the NCR node indication into a message and transmits the message to the connection cell (the gNB 200) in step S103. As described above, the message may be Msg5. The message may be a response to the UE capability enquiry (UE capability response).

On the other hand, when the connection cell is not the desired cell (step S102: NO), the NCR-MT 520A transmits the message without the NCR node indication to the connection cell (the gNB 200) in step S104. For example, the NCR-MT 520A does not incorporate the NCR node indication IE into a response (UE capability response) message to the UE capability enquiry.

In step S104, the NCR-MT 520A (the NCR apparatus 500A) may request the gNB 200 to release the RRC connection. For example, the NCR-MT 520A (the NCR apparatus 500A) may initiate a procedure for connection release in the NAS layer. In the procedure, the NAS layer of the NCR-MT 520A (the NCR apparatus 500A) may transmit a NAS message including information indicating the connection release to the AMF 300A. Alternatively, the NCR-MT 520A may transmit to the gNB 200 a UE assistance information message including a release preference IE in which "idle", "inactive", or "outOfConnected" are set as a preferred RRC state. In the procedure, the NCR-MT 520A may notify of a reason for the RRC connection release. For example, the reason may be information for notifying "due to connection to the non-desired cell" and/or "due to reconnection to the desired cell".

In the description of the operation according to the first embodiment, it is assumed that the NCR-MT 520A transitions from the RRC idle state to the RRC connected state. However, it may be assumed that the NCR-MT 520A transitions from the RRC inactive state to the RRC connected state. In this case, the above-described RRC idle state may be read as the RRC inactive state, and the above-described RRC connection establishment (RRC setup) may be read as RRC connection recovery (RRC recovery). The same applies to the variations to be described below.

### (1.5) Variation of Operation according to First Embodiment

A variation of the first embodiment will be described mainly with respect to differences from the first embodiment described above. The present variation may be implemented in combination with the first embodiment described above.

In the first embodiment described above, the gNB 200 has transmitted the NCR configuration information (NCR control signal) to the NCR-MT 520A based on the NCR node indication from the NCR-MT 520A (the NCR apparatus 500A). That is, the gNB 200 uses the NCR node indication to determine whether NCR configuration is necessary. Therefore, when the new NCR configuration information is not necessary (for example, when the NCR apparatus 500A already has valid the NCR configuration information), it is considered that the NCR-MT 520A may not transmit the NCR node indication to the gNB 200. This can suppress the occurrence of unnecessary signaling.

In the present variation, the NCR-MT 520A determines whether there is a need to acquire the NCR configuration information, which is configuration information for the NCR apparatus 500A, from the connection cell (the gNB 200). In response to determining that it is necessary to acquire the NCR configuration information, the NCR-MT 520A transmits the message including the NCR node indication to the connection cell (the gNB 200).

For example, the NCR-MT 520A may determine whether the NCR apparatus 500A has configuration information usable in the connection cell. In response to determining that the NCR apparatus 500A does not have the configuration information usable in the connection cell, the NCR-MT 520A may transmit the message including the NCR node indication to the connection cell (the gNB 200).

The NCR-MT 520A may determine whether the NCR-Fwd 510A is on. In response to determining that the NCR-Fwd 510A is on, the NCR-MT 520A may transmit the message including the NCR node indication to the connection cell (the gNB 200).

The NCR-MT 520A may determine whether to perform relay operation dependent on the NCR control signal from the network 5. Here, the relay operation not dependent on the NCR control signal from the network 5 may be the same as that of the RF repeater of the related art. In response to determining that the relay operation dependent on the NCR control signal from the network 5 is performed, the NCR-MT 520A may transmit the message including the NCR node indication to the connection cell (the gNB 200).

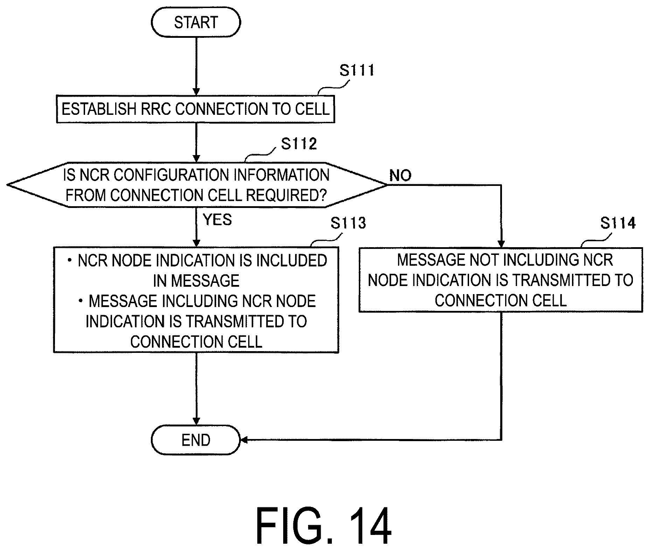

FIG. 14 is a diagram illustrating an operation example of the NCR-MT 520A according to a variation of the first embodiment. Prior to the present operation, the NCR-MT 520A may receive the NCR configuration information from the network 5. The NCR configuration information may include information on a valid area that is an area in which the NCR configuration information is valid. The valid area may be an area including one or more cells or may be an area including one gNB 200. After receiving the NCR configuration information, the NCR-MT 520A may move to another cell, for example, through cell reselection, while holding the NCR configuration information in the RRC idle state or the RRC inactive state.

In step S111, the NCR-MT 520A in the RRC idle state in the cell initiates the RRC connection establishment procedure with the cell and establishes an RRC connection with the cell (the gNB 200).

In step S112, the NCR-MT 520A determines whether the NCR configuration information is necessary. Specifically, the NCR-MT 520A determines whether it is necessary to acquire the NCR configuration information from the connection cell.

In step S112, the NCR-MT 520A may perform a determination based on the presence or absence of a valid configuration. When the NCR configuration information already received is valid (for example, when the connection cell is within the valid area), the NCR-MT 520A determines that the NCR configuration information is not necessary. On the other hand, when the NCR configuration information already received is invalid, the NCR-MT 520A determines that the NCR configuration information is necessary.

In step S112, the NCR-MT 520A may perform a determination based on a relay operation state. When the NCR-Fwd 510A is off, the NCR-MT 520A determines that the NCR configuration information is necessary. For example, when the NCR-MT 520A is in the RRC idle state and the NCR-Fwd 510A is configured to be off at the time of reselecting another cell, the NCR-Fwd 510A may be off. On the other hand, when the NCR-Fwd 510A is operating with the already received NCR configuration information, the NCR-MT 520A determines that the NCR configuration information is not necessary. For example, when the NCR-MT 520A is in the RRC inactive state, the NCR-Fwd 510A may be operating according to the already received NCR configuration information.

In step S112, the NCR-MT 520A may perform a determination based on the operating state of the host apparatus. When the NCR apparatus 500A operates as a network-controlled repeater, the NCR-MT 520A determines that the NCR configuration information is necessary. On the other hand, when the NCR apparatus 500A operates as the RF repeater of the related art without network control, the NCR-MT 520A determines that the NCR configuration information is not necessary.

When it is determined that the NCR configuration information is necessary (step S112: YES), the NCR-MT 520A transmits the message including the NCR node indication to the connection cell (the gNB 200) in step S113. When the connection cell (the gNB 200) receives the NCR node indication, the connection cell may transmit the NCR configuration information to the NCR-MT 520A.

On the other hand, when it is determined that the NCR configuration information is not necessary (step S112: NO), the NCR-MT 520A does not transmit the NCR node indication to the connection cell (the gNB 200) in step S114. The NCR-MT 520A may transmit a message not including the NCR node indication to the connection cell (the gNB 200). When the connection cell (the gNB 200) does not receive the NCR node indication, the connection cell may not transmit the NCR configuration information to the NCR-MT 520A.

### (2) Second Embodiment

A second embodiment is described mainly regarding differences from the first embodiment described above. The second embodiment may be implemented in combination with the first embodiment.

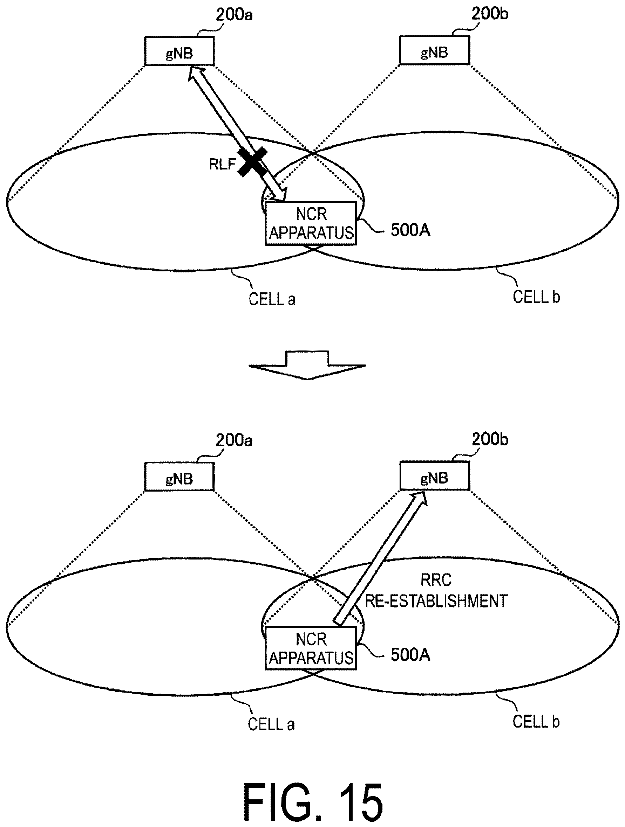

The second embodiment is an embodiment related to an RRC connection reestablishment performed by the NCR-MT 520A in the RRC connected state. FIG. 15 is a diagram illustrating the RRC connection reestablishment in the NCR-MT 520A.

The NCR-MT 520A initiates the RRC connection reestablishment procedure in response to detecting (declaring) a radio link failure (RLF). In the illustrated example, the NCR-MT 520A in the RRC connected state in the cell a of the gNB 200a detects (declares) RLF in the cell a. For example, the NCR-MT 520A detects (declares) the RLF when a radio problem is not recovered from detection of the radio problem to expiration of the first timer (for example, a timer T310). When the NCR-MT 520A detects the RLF, the NCR-MT 520A starts a second timer (for example, timer T311) and attempts the cell selection and RRC connection re-establishment while the second timer is operating. When the RRC connection re-establishment is not successful before the second timer expires, the NCR-MT 520A transitions to the RRC idle state.

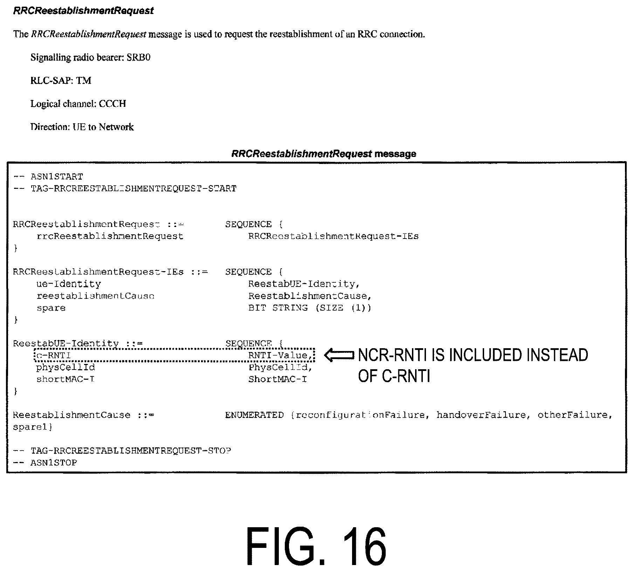

Here, the NCR-MT 520A transmits the RRC reestablishment request message to the cell b (the gNB 200b) selected in cell selection after RLF in order to attempt RRC connection reestablishment. FIG. 16 is a diagram illustrating an RRC reestablishment request (RRC Reestablishment Request) message defined in a 3GPP RRC technical specification (TS38.331). The RRC reestablishment request message includes "ReestabUE-Identity", which is a transmission source identifier of the RRC reestablishment request message, so that the gNB 200 on the reception side identifies a UE context. In the current technical specification, "ReestabUE-Identity" includes the cell RNTI (C-RNTI) assigned to a transmission source of the RRC reestablishment request message.

In the second embodiment, the NCR-MT 520A transmitting the RRC reestablishment request message incorporates an NCR-RNTI, which is an NCR apparatus-dedicated RNTI into the RRC reestablishment request message instead of the C-RNTI. Alternatively, the NCR-MT 520A transmitting the RRC reestablishment request message may incorporate the NCR-RNTI into the RRC reestablishment request message in addition to the C-RNTI. This allows the gNB 200 on the reception side (that is, the gNB 200 that is an RRC connection reestablishment destination) to implicitly know that the transmission source of the RRC reestablishment request message is the NCR-MT 520A based on the NCR-RNTI. This allows the gNB 200 to perform operations such as, for example, preferentially processing the RRC connection reestablishment of the NCR-MT 520A.

Alternatively, the NCR-MT 520A may incorporate the above-described NCR node indication into "ReestabUE-Identity". The NCR-MT 520A may incorporate the NCR node indication into an information element other than "ReestabUE-Identity", such as "Reestablishment Cause" indicating a cause of reestablishment. In other words, the information to be incorporated into the RRC reestablishment request message may be information that allows the gNB 200 on the reception side (that is, the gNB 200 that is an RRC connection reestablishment destination) to implicitly or explicitly know that the transmission source of the RRC reestablishment request message is the NCR-MT 520A.

The communication method according to the second embodiment is a method that is used in the NCR apparatus 500A including the NCR-Fwd 510A that performs a relay operation of relaying a radio signal transmitted between the network 5 and the UE 100, and the NCR-MT 520A that receives the NCR control signal used for control of the NCR-Fwd 510A from the network 5. First, the NCR-MT 520A in the RRC connected state initiates an RRC connection reestablishment procedure for a cell included in the network 5 (also referred to as a "reestablishment cell"). Second, the NCR-MT 520A incorporates the NCR-RNTI assigned to the host apparatus (NCR apparatus) or the NCR node indication indicating that the host apparatus is an NCR apparatus into the RRC reestablishment request message. Third, the NCR-MT 520A transmits the RRC reestablishment request message including the NCR-RNTI or the NCR node indication to the reestablishment cell (the gNB 200).

The NCR-MT 520A may handle the plurality of NCR-Fwds 510A to which the respective NCR-RNTI are assigned. That is, the NCR-MT 520A may include the plurality of NCR-Fwds 510A to which the respective NCR-RNTI are assigned. In this case, the NCR-MT 520A may incorporate the NCR-RNTIs of the plurality of respective NCR-Fwds 510A (the NCR-RNTIs of all the NCR-Fwds 510A) or the NCR-RNTI of a specific NCR-Fwd 510A among the plurality of NCR-Fwds 510A into the RRC reestablishment request message.

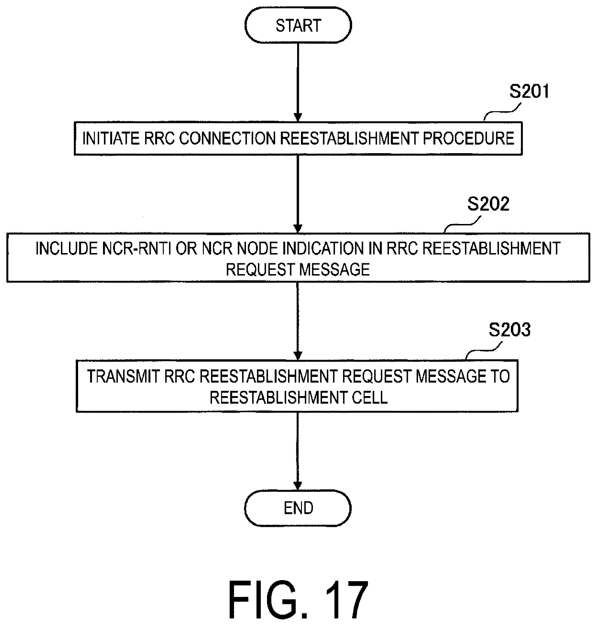

FIG. 17 is a diagram illustrating an operation example of the NCR-MT 520A according to the second embodiment.

In step S201, the NCR-MT 520A in the RRC connected state detects an RLF with the cell and initiates the RRC connection reestablishment procedure. The NCR-MT 520A selects a cell whose wireless quality satisfies a predetermined criterion as the reestablishment cell through cell selection.

In step S202, the NCR-MT 520A incorporates (sets) NCR-RNTI into the RRC reestablishment request message. The NCR-MT 520A may incorporate the NCR node indication into the RRC reestablishment request message. Here, the NCR-MT 520A may incorporate NCR-RNTI (or the NCR node indication) into the RRC reestablishment request message only when the reestablishment cell broadcasts NCR-Supported IE (that is, information indicating that the NCR apparatus is supported) in SIB1.

Here, when the NCR-MT 520A handles only one NCR-Fwd 510A, the NCR-MT 520A incorporates NCR-RNTI associated with the NCR-Fwd 510A (or the NCR-MT 520A) into the RRC reestablishment request message.

On the other hand, when the NCR-MT 520A handles the plurality of NCR-Fwds 510A, a plurality of NCR-RNTIs are likely to be configured. In this case, the NCR-MT 520A may incorporate all the configured NCR-RNTIs into the RRC reestablishment request message. Alternatively, the NCR-MT 520A may incorporate only one (or only some) of the plurality of configured NCR-RNTIs into the RRC reestablishment request message. For example, the NCR-MT 520A may incorporate, into the RRC reestablishment request message, an NCR-RNTI of a first entry in a configuration list when the plurality of NCR-RNTIs are configured. In the case of carrier aggregation or dual connectivity, the NCR-MT 520A may incorporate, into the RRC reestablishment request message, the NCR-RNTI associated with the NCR-Fwd 510A relaying the primary cell (PCell) or the cell of the master cell group (MCG) of the NCR-MT 520A. Alternatively, the NCR-RNTI to be incorporated into the RRC reestablishment request message may be set in advance from the gNB 200 to the NCR-MT 520A.

In step S203, the NCR-MT 520A transmits the RRC reestablishment request message including the NCR-RNTI (or the NCR node indication) to the reestablishment cell (the gNB 200). The reestablishment cell (the gNB 200) identifies that the message has been transmitted from the NCR-MT 520A, based on the NCR-RNTI (or the NCR node indication). The reestablishment cell (the gNB 200) may perform processing such as preferentially receiving the RRC reestablishment request of the NCR-MT 520A. When the cell in which the RLF has occurred and the reestablishment cell belong to different the gNBs 200, the gNB 200 managing the reestablishment cell may transmit a RETRIEVE UE CONTEXT REQUEST message for requesting the transfer of the UE context of the NCR-MT 520A (the NCR apparatus 500A) to the gNB 200 managing the cell in which the RLF has occurred, on the Xn interface. The gNB 200 managing the reestablishment cell may incorporate the NCR-RNTI received in the RRC reestablishment request message as the UE Context ID in the RETRIEVE UE CONTEXT REQUEST message. The gNB 200 managing the cell in which the RLF has occurred may transmit the UE Context identified by the UE Context ID to the gNB 200 managing the reestablishment cell. The UE context may be an NCR-MT context indicating the configuration of the NCR-MT and/or an NCR-Fwd context indicating the configuration (and/or control state) of the NCR-Fwd.

### (3) Third Embodiment

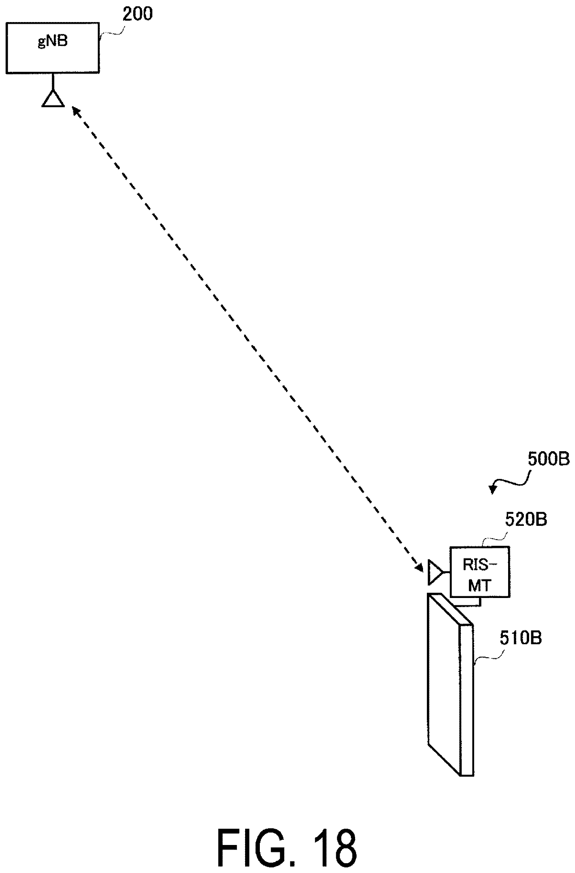

Next, differences between a third embodiment and the above-described embodiments will be mainly described. As illustrated in FIG. 18, a relay apparatus according to the third embodiment is a reconfigurable intelligent surface (RIS) apparatus 500B that changes a propagation direction of an incident radio wave (radio signal) through reflection or refraction. The "NCR" in the above-described embodiments may be read as the "RIS".

The RIS is a type of a relay device (hereinafter, also referred to as a "RIS-Fwd") capable of performing beamforming (directivity control) in a similar way to the NCR by changing the characteristics of metamaterials. The RIS may be able to change a range (distance) of a beam by controlling a reflection direction and/or a refraction direction of each unit element. For example, the RIS may have a configuration capable of controlling the reflection direction and/or refraction direction of each unit element, and focusing on a near UE (directing a beam) or focusing on a far UE (directing a beam).

The RIS apparatus 500B includes a new UE (hereinafter referred to as "RIS-MT") 520B that is a control terminal for controlling RIS-Fwd 510B. The RIS-MT 520B controls the RIS-Fwd 510B in cooperation with the gNB 200 by establishing a wireless connection to the gNB 200 and performing wireless communication with the gNB 200. The RIS-Fwd 510B may be a reflective RIS. Such an RIS-Fwd 510B reflects an incident radio wave to change a propagation direction of the radio wave. Here, a reflection angle of the radio wave can be variably set. The RIS-Fwd 510B reflects radio waves incident from the gNB 200 toward the UE 100. The RIS-Fwd 510B may be a transmissive RIS. Such an RIS-Fwd 510B refracts an incident radio wave to change the propagation direction of the radio wave. Here, a refraction angle of the radio wave can be variably set.

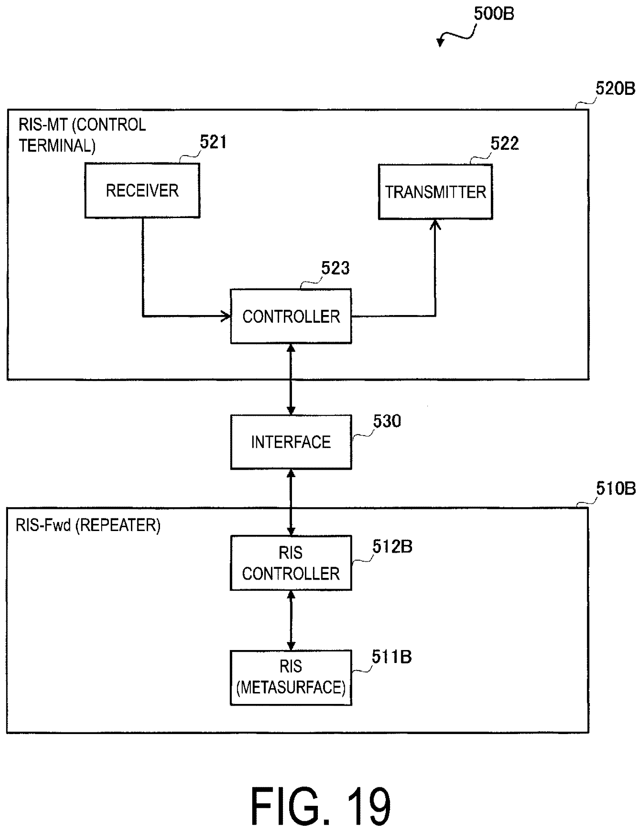

FIG. 19 is a diagram illustrating an example of a configuration of a RIS-Fwd (relay device) 510B and a RIS-MT (control terminal) 520B according to the third embodiment. The RIS-MT 520B has a receiver 521, a transmitter 522, and a controller 523. Such a configuration is the same as that of the above-described embodiment. The RIS-Fwd 510B includes a RIS 511B and a RIS controller 512B. The RIS 511B is a metasurface configured using a metamaterial. For example, RIS 511B is configured by disposing extremely small structures relative to the wavelength of radio waves in an array, and the direction and/or beam shape of the reflected waves can be arbitrarily designed by making the structures different shapes depending on their disposition location. The RIS 511B may be a transparent dynamic metasurface. The RIS 511B may be configured by stacking a transparent glass substrate on transparent version of a metasurface substrate on which a large number of small structures are regularly disposed, and may be capable of dynamically controlling three patterns of a mode of transmitting an incident radio wave, a mode of transmitting a part of a radio wave and reflecting a part thereof, and a mode of reflecting all radio waves by minutely moving the stacked glass substrate. The RIS controller 512B controls the RIS 511B in response to a RIS control signal from the controller 523 in the RIS-MT 520B. The RIS controller 512B may include at least one processor and at least one actuator. The processor interprets a RIS control signal from the controller 523 in the RIS-MT 520B to drive the actuator in response to the RIS control signal.

In the third embodiment, "RIS Node Indication" indicating that the host apparatus is an RIS apparatus may be used instead of the above-described "NCR node indication". The "RIS node indication" may be defined as information different from the "NCR node indication".

### (4) Other Embodiments

In the above-described embodiment, an example in which the relay apparatus performing relay transmission is the NCR apparatus 500A or a RIS apparatus 500B has been described. However, the relay apparatus that performs relay transmission is not limited to the NCR apparatus 500A or the RIS apparatus 500B, and may be an integrated access and backhaul (IAB) node defined in the technical specifications of 3GPP.

Each of the above-described operation flows is not limited to being performed separately and independently, but can be performed by combining two or more operation flows. For example, some steps of one operation flow may be added to another operation flow or some steps of one operation flow may be replaced with some steps of another operation flow. In each flow, all steps may not be necessarily performed, and only some of the steps may be performed.

In the above-described embodiment, an example in which the base station is an NR base station (gNB) has been described, but the base station may be an LTE base station (eNB). The base station may be a relay node such as an IAB node. The base station may be a distributed unit (DU) of the IAB node. Further, the UE 100 may be a mobile termination (MT) of the IAB node.

A program causing a computer to execute each of the processes performed by the communication apparatus according to the embodiment described above, for example, the UE 100 (NCR-MT 520A and RIS-MT 520B) or the gNB 200 may be provided. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, and may be, for example, a recording medium such as a CD-ROM or a DVD-ROM. Circuits for executing processing performed by the UE 100 or the gNB 200 may be integrated, and at least a part of the UE 100 and the gNB 200 may be implemented as a semiconductor integrated circuit (chipset, System on a chip (SoC)).

Further, the term "network node" mainly means a base station, but may also mean a core network apparatus or a part (CU, DU, or RU) of a base station. The network node may be configured by a combination of at least a part of a core network apparatus and at least a part of a base station.

A program causing a computer to execute each of the processing performed by the UE 100, the gNB 200, or the relay apparatus may be provided. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, and may be, for example, a recording medium such as a CD-ROM or a DVD-ROM. Further, circuits for executing each processing performed by the UE 100, the gNB 200, or the relay apparatus may be integrated, and at least a part of the UE 100, the gNB 200, or the relay apparatus may be configured as a semiconductor integrated circuit (chipset or system on a chip (SoC)).

Functions realized by the UE 100, the gNB 200 (network node), or the relay apparatus may be implemented in circuitry or processing circuitry that includes a general-purpose processor, a special-purpose processor, an integrated circuit, an application specific integrated circuit (ASIC), a central processing unit (CPU), conventional circuit, and/or combinations thereof programmed to realize the described functions. The processor may include transistors and other circuits and may be considered as the circuitry or processing circuitry. The processor may be a programmed processor that executes a program stored in a memory. Circuitry, unit, and means herein are hardware programmed to realize the described functions, or hardware executing the functions. The hardware may be any hardware disclosed herein or any hardware programmed to realize or known to execute the described functions. When the hardware is a processor that is considered to be a type of circuitry, the circuitry, means, or unit is a combination of hardware with software used to configure the hardware and/or processor.

The phrases "based on" and "depending on/in response to" used in the present disclosure do not mean "based only on" and "only depending on/in response to" unless specifically stated otherwise. The phrase "based on" means both "based only on" and "based at least in part on." The phrase "depending on" means both "only depending on" and "at least partially depending on." The terms "include," "comprise" and variations thereof do not mean "include only items stated" but instead mean "may include only items stated" or "may include not only the items stated but also other items." The term "or" used in the present disclosure is not intended to be "exclusive or." Further, any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

The embodiments have been described above in detail with reference to the drawings, but specific configurations are not limited to those described above, and various design variation can be made without departing from the gist of the present disclosure.

This application claims priority to U.S. Provisional Application No. 63/445103, filed February 13, 2023, the entire contents of which are incorporated herein by reference.

### (5) Supplements

Features relating to the embodiments described above are described below as supplements.

### (Supplement 1)

A communication method used in a relay apparatus including a relay device configured to perform a relay operation of relaying a radio signal transmitted between a network and a user equipment, and a control terminal configured to receive from the network a control signal used for control of the relay device, the communication method including the steps of:
transitioning, by the control terminal, to a radio resource control (RRC) connected state in a cell included in the network;
determining whether a condition is satisfied for incorporating notification information indicating that a host apparatus is the relay apparatus into a message to be transmitted from the control terminal to the cell; and
transmitting the message including the notification information from the control terminal to the cell in response to determining that the condition is satisfied.

### (Supplement 2)

The communication method according to supplement 1, wherein the message is an RRC setup completion message or a UE capability response message.

### (Supplement 3)

The communication method according to supplement 1 or 2,
wherein the step of determining includes a step of determining whether the cell is a desired cell defined as a connection destination for the relay apparatus, and
the step of transmitting includes a step of transmitting the message including the notification information from the control terminal to the cell in response to determining that the cell is the desired cell.

### (Supplement 4)

The communication method according to supplement 3, further including the step of:
transmitting, from the control terminal to the cell, information for prompting the network to transition from the RRC connected state to another RRC state in response to determining that the cell is not the desired cell.

### (Supplement 5)

The communication method according to any one of supplements 1 to 4,
wherein the step of determining includes a step of determining whether there is a need to acquire configuration information for the relay apparatus from the cell, and
the step of transmitting includes a step of transmitting the message including the notification information from the control terminal to the cell in response to determining that there is the need.

### (Supplement 6)

The communication method according to supplement 5, wherein
the step of determining includes a step of determining whether the relay apparatus has the configuration information usable in the cell, and
the step of transmitting includes a step of transmitting the message including the notification information from the control terminal to the cell in response to determining that the relay apparatus does not have the configuration information usable in the cell.

### (Supplement 7)

The communication method according to supplement 5 or 6,
wherein the step of determining includes a step of determining whether the relay device is on, and
the step of transmitting includes a step of transmitting the message including the notification information from the control terminal to the cell in response to determining that the relay device is on.

### (Supplement 8)

The communication method according to any one of supplements 5 to 7,
wherein the step of determining includes a step of determining whether the relay operation dependent on the control signal from the network is to be performed, and
the step of transmitting includes a step of transmitting the message including the notification information from the control terminal to the cell in response to determining that the relay operation dependent on the control signal from the network is to be performed.

### (Supplement 9)

A communication method used in a relay apparatus including a relay device configured to perform a relay operation of relaying a radio signal transmitted between a network and a user equipment, and a control terminal configured to receive from the network a control signal used for control of the relay device, the communication method including the steps of:
initiating, by the control terminal in a radio resource control (RRC) connected state, an RRC connection reestablishment procedure for a cell included in the network;
incorporating, into an RRC reestablishment request message, a relay apparatus-dedicated radio network temporary identifier (RNTI) assigned to the relay apparatus or notification information indicating that a host apparatus is the relay apparatus; and
transmitting, from the control terminal to the cell, the RRC reestablishment request message including the relay apparatus-dedicated RNTI or the notification information.

### (Supplement 10)

The communication method according to supplement 9, wherein, when the control terminal handles a plurality of relay devices each assigned the relay apparatus-dedicated RNTI, the step of including includes a step of incorporating, into the RRC reestablishment request message, the relay apparatus-dedicated RNTI of each of the plurality of relay devices, or the relay apparatus-dedicated RNTI of a specific relay device among the plurality of relay devices.

### (6) Supplements

### 1. Introduction

In RAN #97e, a work item for the network-controlled repeater (NCR) has been approved. RAN2 #119bis-e and RAN2 #120 have achieved significant progress with many agreements.

In this supplement, remaining open/potential problems of RAN2 regarding the NCR are discussed.

### 2. Discussion

### 2.1. NCR-Fwd ON/OFF Related Matters

### 2.1.1. Open Issue Related to RRC Release

In the RAN2 #120, the following agreement was obtained.

For NCR-Fwd ON/OFF:
When NCR-MT is in the RRC connected mode, NCR-Fwd can be turned ON or OFF according to the side control information received from the gNB.
After the NCR-MT enters the RRC inactive mode, the NCR-Fwd can be turned ON or OFF according to the last configuration received from the gNB.
Further study is needed for release to the RRC idle state.

RLF of the NCR-MT:
the NCR-MT performs cell selection and triggers the RRC reestablishment after the NCR-MT declares the RLF;
the NCR-Fwd is turned OFF when no suitable cell is found and the NCR-MT is in the RRC idle state; and
the NCR-Fwd is OFF during the RRC reestablishment procedure.

One unsolved problem is whether it is a valid case for the gNB to release the NCR-MT to the idle state. According to the discussion in RAN2 #120, there are two camps below for the RRC state of the NCR-MT:

Assumption 1: NCR-MT is basically connected:
In this assumption, the gNB will not release the NCR-MT because the NCR must always be controllable by the network. Therefore, there is a possibility that the NCR-MT is in the idle state only at an initial access (power ON) or RLF (to be precise, at the time of RRC re-establishment failure). Since a state of the NCR-Fwd due to initial access is clear (that is, the NCR-Fwd should be OFF) and the state due to RLF has already been agreed (that is, the NCR-Fwd should also be OFF), no additional NCR operation needs to be defined when the gNB releases the NCR-MT to the idle state.

Assumption 2: The gNB can release NCR-MT:
In this assumption, since the RRC idle state has already been agreed upon by the RAN2, the gNB can release the NCR-MT for NCR power saving, signaling overhead reduction, and the like. Accordingly, the NCR-MT may become idle due to all legacy conditions such as initial access, RLF, and RRC release. Some companies have stated that after transitioning to the idle state, the NCR-Fwd is likely to fall back to a legacy RF repeater.

Observation 1: There were two arguments related to whether an ON/OFF operation of the NCR-Fwd needs to be defined, for whether the gNB should return the NCR-MT to the idle state.

Assumption 1 is very simple because the NCR is always network controlled by the side control information and RRC signaling and there is no reason for the gNB to release the NCR-MT in a normal state. However, in smart gNB implementation, the NCR-MT may be released under specific conditions, such as power savings and signaling overhead reduction, similar to assumption 2. In this sense, a specification should allow for various gNB implementations, and operation of the NCR during idle state according to RRC release should be generally clarified.

Observation 2: In normal operation, there is no reason for the gNB to put the NCR-MT in the idle state, but the RRC release may be permitted depending on the implementation of the gNB under specific conditions.

On the other hand, for the operation of the NCR in the inactive state, after RAN2 enters WA: NCR-MT into the RRC inactive mode, NCR-Fwd can be turned ON or OFF according to a configuration last received from the gNB. That is, since the gNB can always page the NCR-MT through RAN paging, it is reasonable to align the operation of the NCR with that of the connected (that is, "no specific function enhancement"), as agreed upon by RAN2. It will be appreciated that the NCR-MT in an idle state cannot be controlled by the gNB since CN paging is required to establish an RRC connection for transmitting the side control information and the configuration. Therefore, the operation of the NCR in the idle state needs to be considered separately from the inactive state.

Observation 3: The operation of the NCR-Fwd in the inactive state is consistent with the operation in the connected state and should be different from the operation of the NCR-Fwd in the idle state.

In addition, as described in Assumption 2 above, when the NCR is not controlled by the gNB, the inventors consider that the NCR is likely to fall back to the legacy RF repeater. Since the RAN2 agrees that "the NCR-Fwd can be turned ON or OFF according to the last configuration received from the gNB", it is clear that the inactive NCR cannot fall back to the legacy RF-repeater. In other words, the possibility of fallback to the legacy RF repeater is available only when the NCR-MT is in the idle state.

The legacy RF repeater is an implementation technology in terms of network control. Thus, when the NCR falls back to the legacy RF repeater, this is no longer a network-controlled repeater. In other words, when a node is no longer NCR (for example, when an NCR-MT transitions to an idle state), the operation of the NCR may be anything depending on the implementation.

Observation 4: According to current agreement, an NCR in an inactive state cannot fall back to the legacy RF repeater. That is, the last configuration received from the gNB must be followed, as agreed upon by the RAN2.

Observation 5: When the NCR is not controlled by the gNB (for example, when the NCR-MT transitions to the idle state), the node is likely not to be considered as an NCR from the perspective of network control.

As discussed in Observations 2 and 3, the operation of the NCR in the idle state according to the RRC release should be clarified and be different from that in the inactive state in order to enable various gNB implementations.

As described above, the RAN2 has already agreed upon "when no suitable cell is found and the NCR-MT is in the RRC idle state, the NCR-Fwd will be OFF" for the operation of the NCR due to the RLF. On this agreement, there is no significant reason to distinguish the transition to the idle state due to RRC release according to the RLF. Therefore, when the NCR-MT transitions to the idle state, the NCR-Fwd should be OFF regardless of a cause of the state transition.

Since this operation does not preclude an implementation-specific operation, the node can operate as the legacy RF repeater (that is, "fallback" operation) even when the node is not considered as the NCR (such as when the NCR-MT is idle).

Proposal 1: The RAN2 should agree to turn the NCR-Fwd OFF when the NCR-MT is released to the idle state, as in the case of the RLF.

### 2.1.2. Potential Problems with RRC Re-establishment

Currently, the RAN2 agreement only assumes that the NCR-MT is always in the same cell. However, the NCR-MT is likely to change the serving cell/camping cell due to a radio state such as FR2 blockage even though NCR mobility is not supported. Therefore, when a cell with a different NCR-MT is (re-)selected, it is worth discussing what happens.

RAN2 #120 agreed to the following description.
For NCR-MT RLF:
the NCR-MT performs cell selection and triggers the RRC reestablishment after the NCR-MT declares the RLF;
the NCR-Fwd is turned OFF when no suitable cell is found and the NCR-MT is in the RRC idle state; and
the NCR-Fwd is OFF during the RRC reestablishment procedure.

For RRC re-establishment, the following steps and potential problems are identified according to the agreement:
Step 1: The NCR-MT declares the RLF and starts cell selection and RRC re-establishment. During these procedures, NCR-Fwd is OFF as already agreed.
Step 2a: When the NCR-MT selects the same cell and the RRC re-establishment is successfully completed, the NCR-Fwd returns to ON according to the last configuration.
Step 2b: When the NCR-MT selects a different cell and the RRC re-establishment is successfully completed, it is determined whether the NCR-Fwd should be turned OFF.

For the potential problem of step 2a, since NCR has a configuration provided by the same cell, the NCR-Fwd is generally considered to be able to resume operation with the last configuration. In this case, signaling overhead for reconfiguring the NCR can be avoided.

On the other hand, since the RLF has occurred in the NCR-MT, the gNB may not prioritize such automatic resumption of the NCR-Fwd operation and, for example, in such a case, the gNB is likely to change the NCR configuration. Therefore, explicitly indicating whether the gNB should resume the operation of the NCR-Fwd with the last configuration or turn the NCR-Fwd OFF is, for example, an option as to whether to perform RRC reconfiguration in advance or to perform RRC re-establishment in time.

As another option, NCR-Fwd may be considered to be OFF even after a successful RRC re-establishment to the same cell. This is either a hard-coded definition or an indication of the gNB as described above. In this case, when the NCR-MT declares the RLF (or starts the RRC re-establishment procedure), the last RRC configuration (and the last indication using the side control information) should be discarded.

Proposal 2: The RAN2 should discuss whether NCR-Fwd will resume operation with the last configuration when RRC re-establishment to the same cell is successful.

For the potential problem of step 2b, the last configuration of the NCR-MT is provided by the last serving cell and not by the new cell. Therefore, it is easy for the NCR to be provided with a new configuration from the new cell. In this case, the NCR-MT needs to discard the last RRC configuration (and the last indication using the side control information) when selecting a different cell (or when transmitting an RRC re-establishment request towards a different cell).

Proposal 3: The RAN2 should discuss whether the NCR-MT will discard the last configuration when RRC re-establishment to a different cell is started.

### 2.1.3. Potential Problem with Cell Reselection

In the RAN2 #120, the following agreement was made.
The NCR-MT essentially supports cell reselection and RRM measurement in the RRC idle state and the RRC inactive state.
In Rel-18, the NCR-MT does not support handover and RRM measurement in the RRC connected state.

One potential problem with the cell reselection is priority processing for a specific cell. For the legacy RF repeater, deployment is determined by network planning and/or RF measurement on site. Thus, it is assumed that a desired cell(s) is planned for each NCR, that is, network planning determines a relationship between the serving cell and the NCR. Such a desired cell is likely to be set to the NCR by the OAM.

Observation 6: The NCR can configure the desired cell, for example, by OAM.

In this case, the NCR-MT should avoid camping (or connecting) on the undesired cell. Therefore, the NCR-MT should prioritize desirable cells over undesirable cells. While cell selection broadly allows implementation-specific operations (that is, the IAB-MT selects any suitable cell as long as the cell is appropriate), cell reselection consists of a set of deterministic operations according to a specification (inter-frequency cell reselection criterion, ranking, or the like). Therefore, standard support is required to ensure network planning of the NCR.

The simplest approach is to enhance priority processing of cell reselection. The NCR-MT may prioritize the desired cell, similarly to an MBS frequency or a side link frequency (priority may vary depending on the preference of the UE). This enhancement allows the NCR-MT to constantly make measurement to attempt to reselect the desired cell, and to minimize the possibility of camping on/connecting to undesired cells.

Another aspect is to define an NCR-specific offset for intra-frequency cell reselection (that is, within an R criterion). This is because the ranking is likely to cause the NCR-MT to reselect an undesired cell on the same frequency when the inventors consider that the NCR is likely to be deployed at a cell edge (that is, a coverage of a macro cell is likely to be extended).

Proposal 4: The RAN2 should discuss whether the NCR-MT is allowed to prioritize the desired cell (that is, the cell of interest) in the cell reselection procedure.

Another potential problem is for mobility in the inactive mode. The RAN2 agreed that "after the NCR-MT transitions to the RRC inactive mode, the NCR-Fwd can be turned ON or OFF according to the last configuration received from the gNB". Based on this agreement, after the NCR-MT becomes inactive, the NCR-MT is likely to reselect to a different cell due to, for example, interruption of the FR2. When NCR-Fwd is OFF, there is no problem, but when NCR-Fwd is ON, the same problem as that described in section 2.1.2 is likely to occur.

Observation 7: When NCR-MT is inactive in a state in which NCR-Fwd is ON, a different cell is likely to be re-selected.

In this scenario, it is necessary to clarify how the NCR should operate. Possible options are as follows:
Option 1: NCR-Fwd remains ON at the last configuration based on current agreement matters.
Option 2: NCR-Fwd is turned OFF (or NCR-MT discards the last configuration), similar to Proposal 3 above.

Since option 1 is the same as an agreement matter that "after the NCR-MT has entered the inactive mode, the NCR-Fwd can be turned ON or OFF according to the configuration last received from the gNB", and "WA: RRC inactive is arbitrarily supported without specific function enhancement", option 1 may be efficient in that standardization efforts are minimized.

Option 2 is considered a reasonable operation from a technical perspective. This is because the configuration has been provided by another cell (that is, the last serving cell) and it is somewhat unnatural for the NCR-Fwd to operate in a configuration that a current cell is not recognized. This is because the reselected cell is likely to have different resources available for NCR. Therefore, taking option 2 can be said to be a fail-safe mechanism since the RAN2 also agrees that the cell reselection is a mandatory support.

Based on the above discussion, option 2 is more desirable from the perspective of technical rationality.

Proposal 5: The RAN2 should discuss whether the NCR-Fwd should be turned OFF when the NCR-MT reselects to a different cell.

Yet another potential problem is when the NCR-MT connects to an undesired cell after cell reselection or RRC re-establishment. In terms of the NCR, it is necessary to reconnect to the desired cell. From the perspective of the gNB, RRC connection with the NCR-MT ultimately makes no sense. RAN2 has already agreed that "NCR-MT does not support handover". Therefore, the only way the gNB can take is to release the NCR-MT, but it is not guaranteed that the NCR-MT will camp on/reconnect to the desired cell because the NCR-MT will follow the cell reselection procedure after transitioning to the idle state. In this case, redirection is likely to be enhanced to cause the NCR-MT to camp on the desired cell. However, there remains a question as to whether the gNB can acquire the desired cell of the NCR (for example, a cell set by the OAM).

Proposal 6: The RAN2 should discuss whether to enhance redirection in order to move the NCR-MT from a desired cell to a desired cell (that is instead of handover).

### 2.2. Access Control Problem

### 2.2.1. Open Issue on NPN Support

In RAN2 #120, the following was agreed upon according to matters to be considered:
An NCR support indication is introduced to each PLMN in SIB1.

The inventors consider that NCR deployment in NPN is also beneficial and has potential market demand. For example, NPN frequencies are planned in high bands of FR1 (4.9 GHz) and FR2 (28 GHz) in Japan. In such frequencies, the coverage expansion by NCR is often important. As another example, NPN is likely to exhibit higher performance in a URLLC use case such as a smart factory due to its local/closed area nature. In such cases, low-latency repeaters are more suitable than high-latency relays.

From a specification perspective, the NCR support indication is assumed to be a one-bit indication added to each entry of the PLMN Identity Info List in SIB1, similar to the IAB support indication. In order to support NCR with NPN, it is only necessary to add the same indication to each entry of the NPN identity info list, similar to IAB. Therefore, standardization effort is expected to be minimal (near zero). Further, in a PLMN network, no signaling overhead occurs (that is, the NPN identity info list does not exist in such a network since the list is an arbitrary IE).

In addition, the RAN2 has already agreed to the following statement, which clearly indicates that NCR is supported in NPN.

NPN-capable NCR-MT should consider cellReservedForOtherUse for NPN-only cell determination.

In light of the above, the inventors consider that no "artificial" restriction is necessary for NCR introduction in NPN. Therefore, the RAN2 should confirm that NCR is supported in NPN, which will resolve the previous consideration matters.

Proposal 7: The RAN2 should confirm that NCR is supported in NPN. Therefore, NCR support indication is also added to each entry in the NPN identity list in SIB1.

### 2.2.2. Potential Problems with PRACH Resources

In IAB, a specific PRACH scene (RO) can be provided to avoid possible collision. Opportunities thereof are defined in the following IE to extend the common configuration of the UE.

Since the NCR is considered a network node like the IAB node, PRACH collision with the UE should also be avoided. For the UE in the extended coverage provided by the NCR, the preamble transmitted by the UE is forwarded to the gNB by the NCR, whereas in the case of IAB, the preamble transmitted by the UE is terminated by the IAB node. Therefore, the inventors consider this to be a more serious problem for the NCR. Therefore, the inventors consider this to be a more serious problem for the NCR in terms of PRACH collision at the gNB receiving side.

In this sense, it is worth considering whether PRACH resources separated from the UE should be provided to the NCR-MT. When this is necessary, further consideration is required as to whether the separate PRACH resources are defined by separate ROs (as in Rel-16 IAB) or defined by PRACH partitioning (that is, as part of Rel-17 RedCap, SDT, slicing, and Feature Combination Preambles defined for coverage extension).

Proposal 8: The RAN2 should discuss whether to define individual PRACH resources specific to NCR-MT.

### REFERENCE SIGNS

1: Mobile communication system
100: UE
200: gNB
210: Transmitter
220: Receiver
230: Controller
240: Backhaul communicator
500A: NCR apparatus
510A: NCR-Fwd
520A: NCR-MT
500B: RIS apparatus
510B: RIS-Fwd
520B: RIS-MT
511A: Wireless unit
511 a: Antenna
511b: RF circuit
511c: Directivity controller
512A: NCR controller
512B: RIS controller
521: Receiver
522: Transmitter
523: Controller
530: Interface

## Claims

1. A communication method used in a relay apparatus comprising a relay device configured to perform a relay operation of relaying a radio signal transmitted between a network and a user equipment, and a control terminal configured to receive from the network a control signal used for control of the relay device, the communication method comprising:
transitioning, by the control terminal, to a radio resource control (RRC) connected state in a cell that the network comprises;
determining whether a condition is satisfied for incorporating notification information indicating that a host apparatus is the relay apparatus into a message to be transmitted from the control terminal to the cell; and
transmitting the message comprising the notification information from the control terminal to the cell in response to determining that the condition is satisfied.

2. The communication method according to claim 1, wherein the message is an RRC setup completion message or a user equipment (UE) capability response message.

3. The communication method according to claim 1 or 2,
wherein the determining comprises determining whether the cell is a desired cell defined as a connection destination for the relay apparatus, and
the transmitting comprises transmitting the message comprising the notification information from the control terminal to the cell in response to determining that the cell is the desired cell.

4. The communication method according to claim 3, further comprising:
transmitting, from the control terminal to the cell, information for prompting the network to transition from the RRC connected state to another RRC state in response to determining that the cell is not the desired cell.

5. The communication method according to claim 1 or 2,
wherein the determining comprises determining whether there is a need to acquire configuration information for the relay apparatus from the cell, and
the transmitting comprises transmitting the message comprising the notification information from the control terminal to the cell in response to determining that there is the need.

6. The communication method according to claim 5,
wherein the determining comprises determining whether the relay apparatus contains the configuration information usable in the cell, and
the transmitting comprises transmitting the message comprising the notification information from the control terminal to the cell in response to determining that the relay apparatus does not contain the configuration information usable in the cell.

7. The communication method according to claim 5,
wherein the determining comprises determining whether the relay device is on, and
the transmitting comprises transmitting the message comprising the notification information from the control terminal to the cell in response to determining that the relay device is on.

8. The communication method according to claim 5,
wherein the determining comprises determining whether the relay operation dependent on the control signal from the network is to be performed, and
the transmitting comprises transmitting the message comprising the notification information from the control terminal to the cell in response to determining that the relay operation dependent on the control signal from the network is to be performed.

9. A communication method used in a relay apparatus comprising a relay device configured to perform a relay operation of relaying a radio signal transmitted between a network and a user equipment, and a control terminal configured to receive from the network a control signal used for control of the relay device, the communication method comprising:
initiating, by the control terminal in a radio resource control (RRC) connected state, an RRC connection reestablishment procedure for a cell that the network comprises;
incorporating, into an RRC reestablishment request message, a relay apparatus-dedicated radio network temporary identifier (RNTI) assigned to the relay apparatus or notification information indicating that a host apparatus is the relay apparatus; and
transmitting, from the control terminal to the cell, the RRC reestablishment request message comprising the relay apparatus-dedicated RNTI or the notification information.

10. The communication method according to claim 9, wherein, when the control terminal handles a plurality of relay devices each assigned the relay apparatus-dedicated RNTI, the incorporating comprises incorporating, into the RRC reestablishment request message, the relay apparatus-dedicated RNTI of each of the plurality of relay devices, or the relay apparatus-dedicated RNTI of a specific relay device among the plurality of relay devices.
